# EUROPEAN PATENT SPECIFICATION

(11) **EP 1 421 594 B1**
(45) Date of publication and mention of the grant of the patent: **09.10.2013**
(21) Application number: 02788731.4
(22) Date of filing: 05.12.2002
(51) Int. Cl.: B82Y 10/00, H01J 1/312, H01J 9/02

(54) **ELECTRON EMITTING DEVICE AND METHOD OF MANUFACTURING THE SAME AND DISPLAY APPARATUS USING THE SAME**
ELEKTRONENEMITTIERENDE VORRICHTUNG,VERFAHREN ZUR HERSTELLUNG DERSELBEN UND DAMIT AUSGESTATTETES ANZEIGEGERÄT
DISPOSITIF EMETTEUR D'ELECTRONS, SON PROCEDE DE FABRICATION ET DISPOSITIF D'AFFICHAGE L'UTILISANT

(30) Priority: 06.12.2001 JP 2001372882
(43) Date of publication of application: 26.05.2004
(73) Proprietor: Pioneer Corporation, Kanagawa 212-0031 (JP)
(72) Inventor: NEGISHI, N. Corp. Res. & Dev. Lab. Pioneer Corp., Tsurugashima-shi, Saitama 350-2288 (JP); YAMADA, T. Corp. Res. & Dev. Lab. Pioneer Corp., Tsurugashima-shi, Saitama 350-2288 (JP); YOSHIKAWA, T. Corp. Res. & Dev. Lab. Pioneer Corp., Tsurugashima-shi, Saitama 350-2288 (JP); OGASAWARA, K. Corp. Res. & Dev. Lab. Pioneer Corp., Tsurugashima-shi, Saitama 350-2288 (JP); SATOH, H. Corp. Res. & Dev. Lab. Pioneer Corp., Tsurugashima-shi, Saitama 350-2288 (JP); CHUMAN, T. Corp. Res. & Dev. Lab. Pioneer Corp., Tsurugashima-shi, Saitama 350-2288 (JP); IWASAKI, S. Corp. Res. & Dev. Lab. Pioneer Corp., Tsurugashima-shi, Saitama 350-2288 (JP); SAKEMURA, K. Corp. Res. & Dev. Lab. Pioneer Corp., Tsurugashima-shi, Saitama 350-2288 (JP); HATA, T. Corp. Res. & Dev. Lab. Pioneer Corp., Tsurugashima-shi, Saitama 350-2288 (JP)
(74) Representative: Manitz, Finsterwald & Partner GbR
(86) International application number: PCT/JP2002/012743
(87) International publication number: WO 2003/049132

(56) References cited:
- EP-A- 0 896 354
- EP-A- 0 986 084
- EP-A- 1 117 117
- EP-A- 1 117 118
- US-A- 6 166 487

## Description

### TECHNICAL FIELD

The present invention relates to a method of manufacturing an electron emitting device of the kind as defined in the preamble of claim 1 and to an electron emitting device directly obtained by such a method (cf. Article 64(2) EPC).

### BACKGROUND ART

As flat panel display apparatus, a field emission display (FED) comprising field electron emitting devices is known. One of the known flat light-emitting displays uses a cold-cathode type electron emitting source array in which heating of cathodes is not required. For instance, according to the principle of the light emission in an FED using a Spindt-type cold cathode, the light emission is achieved in the same manner as a CRT (cathode ray tube) although there is a difference as the FED employs the cold cathode, as follows. Electrons are drawn out from a cathode to a vacuum by a gate electrode disposed apart from the cathode. Those electrons collide with a phosphor applied on a transparent anode to emit light.

However, this field emission source has a problem of low manufacturing production since it requires a large number of complicated manufacturing stepes for the minute Spindt-type cold cathodes.

There also are electron emitting devices having metal-insulator-metal (MIM) structures as surface electron sources. One of such MIM-type electron emitting devices has a structure comprising an Al layer, an Al₂O₃ insulative layer having a thickness of about 10 nm, and an Au layer having a thickness of about 10 nm that are sequentially formed on a substrate as a cathode. The MIM-type electron emitting device is placed under a counter electrode within a vacuum. When a voltage is applied between the bottom Al layer and the top Au layer in conjunction with the application of an accelerating voltage to the counter electrode, then a part of the electrons from the top Au layer are emitted. The electrons are accelerated and come in contact with the counter electrode. In this light-emitting device also, the light emission is achieved due to the electrons impinging on the phosphor applied on the counter electrode.

However, the amount of the electron emission is not quite sufficient even with the use of such MIM-type electron emitting devices. It has been believed that the improvement of this electron emission requires reducing the film thickness of the prior art Al₂O₃ insulative layer by several nanometers. Further, it requires giving further uniformity to the film quality of the ultra-thin Al₂O₃ insulative layer and the interface between the Al₂O₃ insulative layer and the top Au layer.

In general, an MIM device or an MIS-type electron emitting device having an insulative layer as thick as several tens of nanometers to several micrometers is not yet capable, as manufactured, of providing electron emission. The called forming process is required. The controllability of this forming process is extremely low, and it is difficult to manufacture the devices with high stability and good reproducibility. Moreover, there is a fact that the growing locations of such forming sites are contingent across the electrode surface, so that originating points of electron emission (electron emitting source) cannot be specified. In other words, the originating points of the electron emission cannot be formed homogeneously across the surface of the device, resulting in poor uniformity of the electron emission pattern.

Moreover, as another electron emitting device, there is a surface-conduction electron emitting device wherein cracks constituting electron emitting sections are provided within an electroconductive thin film through electrification after laying the electroconductive thin film between counter electrodes provided on insulative substrates. These cracks are the sections of the electroconductive thin film that have locally been destroyed, transformed or deformed, so that there are problems in that, it has unevenness and poor geometric reproducibility, the shapes of the electron emitting portions are limited to a linear shape.

A method of manufacturing an electron emitting device of the kind as defined in the preamble of claim 1 is disclosed in document EP 1 117 118 A1.

### DISCLOSURE OF INVENTION

An object of the invention, which has been invented in consideration of the above background, is to provide a method of manufacturing an electron emitting device capable of providing stable electron emission with a low voltage.

According to the invention as defined in Claim 1, a method is provided of manufacturing an electron emitting device, the electron emitting device having: an amorphous electron-supply layer made of at least one of silicon, a mixture containing silicon as a main component and a silicon compound; an insulator layer formed on said electron-supply layer; and a thin-film metal electrode formed on said insulator layer, wherein electrons are emitted upon application of an electric field between said electron-supply layer and said thin-film metal electrode; wherein said insulator layer having at least one island region in which a film thickness of said insulator layer is gradually reduced; wherein said electron emitting device further comprises a carbon region made of one of carbon and a carbon compound provided on at least one of top, bottom and inside of said island region; wherein said island region has a minimum thickness portion and a crystalline region made of at least one of silicon, a mixture containing silicon as a main component and a silicon compound within said electron-supply layer in the minimum thickness portion or near thereto,
the method according to the invention as defined in Claim 1 comprising the steps of:
forming an amorphous electron-supply layer on a substrate, wherein said electron-supply layer is made of at least one of silicon, a mixture containing silicon as a main component and a silicon compound;
forming shields on said electron-supply layer, each of said shields providing a shade around an area in which the shields contact with said electron-supply layer;
depositing an insulator layer over said electron-supply layer and said shields so as to provide said insulator layer as a thin film of an insulator, said insulator layer having island regions each having a minimum thickness portion in which film thickness of said insulator layer is gradually reduced in the proximity of the contact areas of said shields;
forming a thin-film metal electrode over said insulator layer, thereby constituting said island regions as electron emitting sections;
implanting dopant ions into the exposed surfaces of said electron-supply layer in the bottom of said island regions to form a pn junction structure in said electron-supply layer;
providing a said carbon region made of one of carbon and a carbon compound proximal to said island regions after the implantation of said dopant ions; and
electrifying across said electron-supply layer and said thin-film metal electrode to form a crystalline region made of at least one of silicon, a mixture containing silicon as a main component and a silicon compound within said electron-supply layer in the minimum thickness portion or near thereto, wherein said pn junction structure is provided in said crystalline region.

Furthermore, the electron emitting device directly obtained by a method as defined in Claim 1 may be implemented as a high-speed device such as a light-emitting source of a pixel valve, an electron emitting source of an electron microscope, a vacuum microelectronic element and the like. It is also operable as a surface-type or dot-type electron emitting diode, a light-emitting diode, as well as a high-speed switching element.

### BRIEF DESCRIPTION OF DRAWINGS

Figure 1 is a schematic cross-sectional view illustrating an electron emitting device not being an embodiment.
Figures 2 through 9 are schematic cross-sectional views each showing a portion of a device substrate during fabrication according to a manufacturing method not being an embodiment of the electron emitting device.
Figure 10 is an expanded cross-sectional view illustrating a portion of a device substrate during fabrication in a manufacturing method not being an embodiment of another electron emitting device.
Figure 11 is a graph showing a voltage-current characteristic when electrical current is applied to a device substrate to make the crystalline region (crystallizing step).
Figure 12 is a graph showing a voltage-current characteristic of an electron emitting device without performing the crystallizing step.
Figure 13 is a graph showing a voltage-current characteristic of an electron emitting device resulting from performing the crystallizing step.
Figures 14 and 15 are schematic cross-sectional views each illustrating an electron emitting device not being an embodiment in examples.
Figures 16 and 17 are graphs each showing changes of emission current of an electron emitting device not being an embodiment with the elapse of time.
Figures 18 and 19 are schematic perspective views each illustrating a portion of a device substrate during fabrication in a manufacturing method of another electron emitting device not being an embodiment.
Figures 20 through 28 are schematic cross-sectional views each showing a portion of an alternative electron emitting device not being an embodiment.
Figures 29 and 30 are perspective views each showing a portion of a device substrate during fabrication in a manufacturing method not being an embodiment of another electron emitting device.
Figure 31 is a perspective view illustrating another electron emitting device not being an embodiment.
Figures 32 and 33 are perspective views each showing a portion of a device substrate during fabrication in still another manufacturing method not being an embodiment of an electron emitting device.
Figure 34 is a perspective view illustrating still another electron emitting device not being an embodiment.
Figure 35 is perspective view showing a portion illustrating a device substrate during fabrication in a further manufacturing method not being an embodiment of an electron emitting device.
Figure 36 is a perspective view illustrating a further electron emitting device not being an embodiment.
Figures 37 and 38 are perspective views each showing a portion of a device substrate during fabrication in still another manufacturing method not being an embodiment of an electron emitting device.
Figure 39 is a perspective view illustrating still another electron emitting device not being an embodiment.
Figure 40 is a schematic perspective view showing a portion of an example of a flat panel display apparatus having electron emitting devices not being embodiments.
Figure 41 is a schematic cross-sectional view showing a portion of a flat panel display apparatus including the electron emitting device of the example not being an embodiment, taken along the line AA of Figure 40.
Figures 42 and 43 are schematic cross-sectional views each illustrating another example not being an embodiment of an electron emitting light-emitting device.
Figures 44 to 59 are schematic cross-sectional views each illustrating a device substrate during fabrication in still further manufacturing methods not being embodiments of an electron emitting device.

### DETAILED DESCRIPTION OF EXAMPLES

Now, examples not being embodiments will be described in more detail with reference to the accompanying drawings.

### [Electron-Emitting Device]

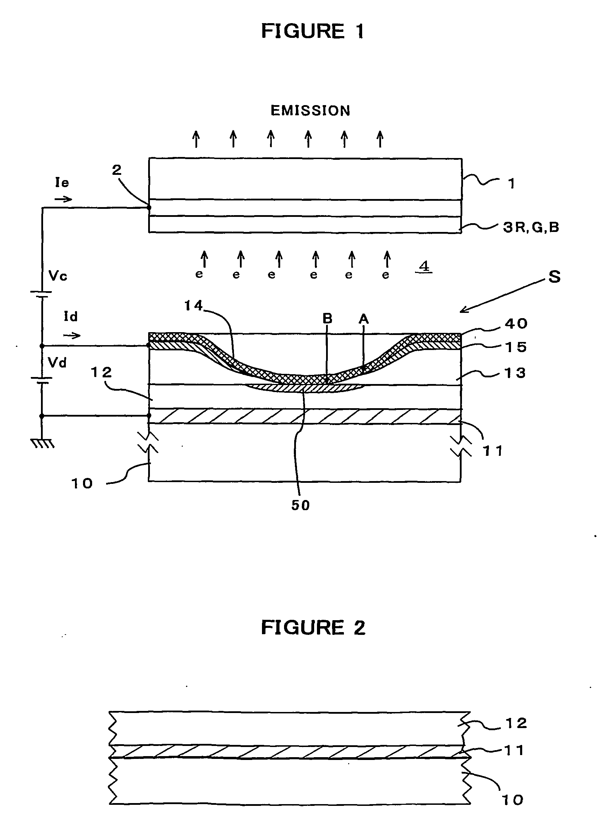

Figure 1 shows an electron emitting device "S" of one example constructed in a stack configuration in which an ohmic electrode 11, an electron-supply layer 12, an insulator layer 13, a thin-film metal electrode 15 formed in turn over a substrate 10 made of glass. The ohmic electrode 11 is made of aluminum (Al), tungsten (W), titanium nitride (TiN), copper (Cu), chrome (Cr) or the like. The electron-supply layer 12 is made of amorphous semiconductor such as silicon (Si) or a mixture containing silicon as a main component or a silicon compound. The insulator layer 13 is made of dielectric such as SiOₓ (x = 0.1 to 2.2) or the like. The thin-film metal electrode 15 made of metal such as tungsten (W), molybdenum (Mo), platinum (Pt), gold (Au) or the like. In the electron emitting device S,
at least one island region 14 is formed on the insulator layer 13 and the thin-film metal electrode 15 in which the thicknesses of the insulator layer 13 and the thin-film metal electrode 15 gradually decrease toward the center of the island region 14. As shown in Figure 1, each island-like region 14 is formed as a recess on the flat surface of the thin-film metal electrode 15, for example.

The electron emitting device S also comprises a carbon region 40 made of at least of carbon, a mixture containing carbon as a main component and a carbon compound formed at least over a recessed portion 14. The crystalline region 50 is formed by utilizing Joule's heat evolved when current flows through a portion of the electron-supply layer 12 so as to crystallize the amorphous portion of the electron-supply layer 12 into a crystal phase at the bottom of the island region 14.

As for the material of the carbon region 40, made of carbon such as amorphous carbon, graphite, carbyne, fullerene (C₂ₙ), diamond-like carbon, carbon nano-tube, carbon nano-fiber, carbon nano-horn, carbon nano-coil, carbon nano-plate, diamond and the like, or carbon compounds such as ZrC, SiC, WC, MoC and the like are effective.

The insulator layer 13 is made of a dielectric material, and its thickness in the flat portion is 50 nm or greater which is extremely large. This layer is formed through a sputtering method under a sputtering condition; gas pressure = 0.1 to 100 mTorr, preferably 0.1 to 20 mTorr, and growth rate = 0.1 to 1000 nm/min., preferably 0.5 to 100 nm/min.

In the insulator layer 13 and the thin-film metal electrode 15, a recess 14 i.e., an island region 14 in which the film thickness of both the films are gradually reduced toward the center, is formed. As shown in Figure 1, the island region 14 is formed as a circular concave region in the flat surface of the thin-film metal electrode 15, and on this island region 14, the carbon region is deposited. In the island region 14, the thin-film metal electrode 15 is terminated on the insulator layer 13 at an edge position A. The insulator layer 13 is also terminated within the island region 14, on the electron-supply layer 12 at an edge position " B ". The carbon region 40 covers the thin-film metal electrode 15, insulator layer 13 and electron-supply layer 12.

As for the material of the electron-supply layer 12 of the electron emitting device, the especially effective material is amorphous silicon (a-Si) doped with an element of group IIIb or Vb and deposited by sputtering or CVD. In addition, it is also possible to use hydrogenated amorphous silicon (a-Si:H) in which the dangling bonds of a-Si are terminated with hydrogen (H), or a compound semiconductor such as hydrogenated amorphous silicon carbide (a-SiC:H) in which a part of Si is replaced with carbon (C) or hydrogenated amorphous silicon nitride (a-SiN:H) in which a part of Si is replaced with nitrogen (N).

As for the dielectric material of the insulator layer 13, silicon oxide (SiOₓ) (x represents an atomic ratio) is especially effective. Further, effective material for the insulator layer may be a metal oxide or a metal nitride such as LiOₓ, LiNₓ, NaOₓ, KOₓ, RbOₓ, CsOₓ, BeOₓ, MgOₓ, MgNₓ, CaOₓ, CaNₓ, SrOₓ, BaOₓ, ScOₓ, YOₓ, YNₓ, LaOₓ, LaNₓ, CeOₓ, PrOₓ, NdOₓ, SmOₓ, EuOₓ, GdOₓ, TbOₓ, DyOₓ, HoOₓ, ErOₓ, TmOₓ, YbOₓ, LuOₓ, TiOₓ, ZrOₓ, ZrNₓ, HfOₓ, HfNₓ, ThOₓ VOₓ, VNₓ, NbOₓ, NbNₓ, TaOₓ, TaNₓ, CrOₓ, CrNₓ, MoOₓ, MoNₓ, WOₓ, WNₓ, MnOₓ, ReOₓ, FeOₓ, FeNₓ, RuOₓ, OsOₓ, CoOₓ, RhOₓ, IrOₓ, NiOₓ, PdOₓ, PtOₓ, CuOₓ, CuNx, AgOₓ, AuOₓ, ZnOₓ, CdOₓ, HgOₓ, BOₓ, BNₓ, AlOₓ, AlNₓ, GaOₓ, GaNₓ, InOₓ, SiNₓ, GeOₓ, SnOₓ, PbOₓ, POₓ, PNₓ, AsOₓ, SbOₓ, SeOₓ, TeOₓ or the like.

It is also effective, for the dielectric material of the insulator layer 13, to use a complex metal oxide such as LiAlO₂, Li₂SiO₃, Li₂TiO₃, Na₂Al₂₂O₃₄, NaFeO₂, Na₄SiO₄, K₂SiO₃, K₂TiO₃, K₂WO₄, Rb₂CrO₄, CS₂CrO₄, MgAl₂O₄, MgFe₂O₄, MgTiO₃, CaTiO₃, CaWO₄, CaZrO₃, SrFe₁₂O₁₉, SrTiO₃, SrZrO₃, BaAl₂O₄, BaFe₁₂O₁₉, BaTiO₃, Y₃Al₅O₁₂, Y₃Fe₅O₁₂, LaFeO₃, La₃Fe₅O₁₂, La₂Ti₂O₇, CeSnO₄, CeTiO₄, Sm₃Fe₅O₁₂, EuFeO₃, Eu₃Fe₅O₁₂, GdFeO₃, Gd₃Fe₅O₁₂, DyFeO₃, Dy₃Fe₅O₁₂, HoFeO₃, Ho₃Fe₅O₁₂, ErFeO₃, Er₃Fe₅O₁₂, Tm₃Fe₅O₁₂, LuFeO₃, Lu₃Fe₅O₁₂, NiTiO₃, Al₂TiO₃, FeTiO₃, BaZrO₃, LiZrO₃, MgZrO₃, HfTiO₄, NH₄VO₃, AgVO₃, LiVO₃, BaNb₂O₆, NaNbO₃, SrNb₂O₆, KTaO₃, NaTaO₃, SrTa₂O₆, CuCr₂O₄, Ag₂CrO₄, BaCrO₄, K₂MoO₄, Na₂MoO₄, NiMoO₄, BaWO₄, NaWO₄, SrWO₄, MnCr₂O₄, MnFe₂O₄, MnTiO₃, MnWO₄, CoFe₂O₄, ZnFe₂O₄, FeWO₄, CoMoO₄, CoTiO₃, CoWO₄, NiFe₂O₄, NiWO₄, CuFe₂O₄, CuMoO₄, CuTiO₃, CuWO₄, Ag₂MoO₄, Ag₂WO₄, ZnAl₂O₄, ZnMoO₄, ZnWO₄, CdSnO₃, CdTiO₃, CdMoO₄, CdWO₄, NaAlO₂, MgAl₂O₄, SrAl₂O₄, Gd₃Ga₅O₁₂, InFeO₃, MgIn₂O₄, AlTiO₅, FeTiO₃, MgTiO₃, Na₂SiO₃, CaSiO₃, ZrSiO₄, K₂GeO₃, Li₂GeO₃, Na₂GeO₃, Bi₂Sn₃O₉, MgSnO₃, SrSnO₃, PbSiO₃, PbMoO₄, PbTiO₃, SnO₂-Sb₂O₃, CuSeO₄, Na₂SeO₃, ZnSeO₃, K₂TeO₃, K₂TeO₄, Na₂TeO₃, Na₂TeO₄ or the like, or a sulfide such as FeS, Al₂S₃, MgS, ZnS and the like, a fluoride such as LiF, MgF₂, SmF₃ and the like, a chloride such as HgCl, FeCl₂, CrCl₃ and the like, a bromide such as AgBr, CuBr, MnBr₂ and the like, an iodide such as PbI₂, CuI, FeI₂ and the like, or a metal oxide nitride such as SiAlON and the like.

Furthermore, carbon such as diamond or fullerene (C₂ₙ), or a metal carbide such as Al₄C₃, B₄C, CaC₂, Cr₃C₂, Mo₂C, MoC, NbC, SiC, TaC, TiC, VC, W₂C, WC, ZrC and the like is also effective. Fullerene (C₂ₙ) is a spherical-shell like molecule made up of carbon atoms only, ranging from C₃₂ through C₉₆₀, among which the most known is C₆₀. The "x" suffix on the above terms such as "Oₓ" or "Nₓ" represents an atomic ratio.

The thickness of the insulator layer 13 in the flat portion other than the island regions is 50 nm or greater, preferably from 100 nm to 1000 nm.

As for the material of the thin-film metal electrode 15 on the electron emission side, metals having a high fusion point such as molybdenum (Mo) rhenium (Re), tantalum (Ta), osmium (Os), iridium (Ir), ruthenium (Ru), rhodium (Rh), vanadium (V), chromium (Cr), zirconium (Zr), platinum (Pt), titanium (Ti), palladium (Pd), iron (Fe), yttrium (Y), cobalt (Co) and nickel (Ni) are effective, particularly, tungsten (W) having an extremely high fusion point is preferably used. Materials, Au, Be, B, C, Al, Si, Sc, Mn, Cu, Zn, Ga, Nb, Tc, Ag, Cd, In, Sn, Tl, Pb, La, Ce, Pr, Nd, Pm, Sm, Eu, Gd, Tb, Dy, Ho, Er, Tm, Yb, Lu and the like may also be use. In addition, an alloy of those metals and compounds having an electrical conductivity such as LaB₆, CeB₆, TiB₂, ZrB₂, HfB₂ and the like may also be used.

### [Manufacturing Method of Electron Emitting Device]

As for the film formation method in manufacturing such electron emitting devices, a physical or chemical method is used. The physical methods are known as physical vapor deposition (PVD) and include a vacuum deposition method, molecular beam epitaxy method, sputtering method, ionized vapor deposition method and laser abrasion method. The chemical methods are known as chemical vapor deposition (CVD) and include thermal CVD, plasma CVD, MOCVD (metal-organic chemical vapor deposition) and the like. Among these methods, the sputtering method is especially effective.

The island region 14 of Figure 1, which is the concave portion, covered by the carbon region 40 is formed in the following manner. First, as shown in Figure 2, the electron-supply layer 12 is formed as an amorphous phase through sputtering on the substrate 10 having the ohmic electrode 11 formed thereon.

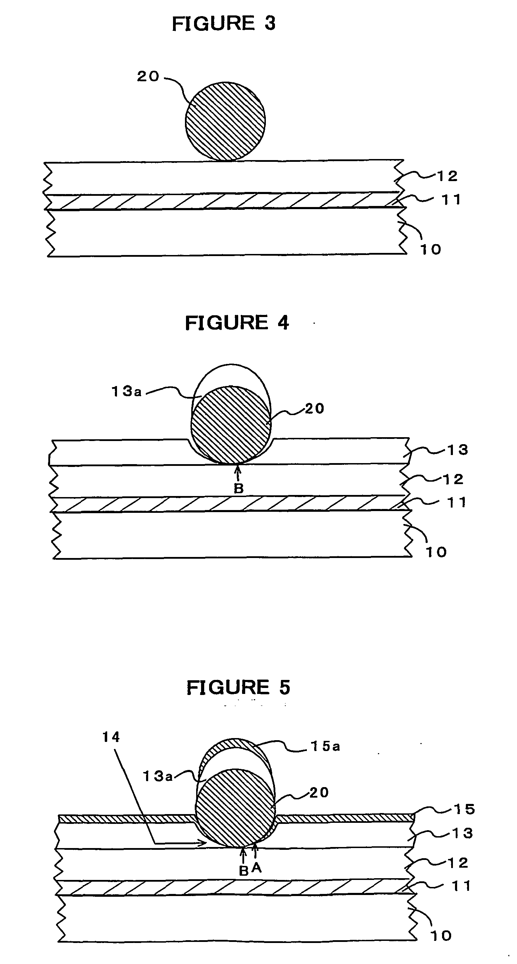

Next, a plurality of spherical fine particles 20 is homogenously sprayed on the electron-supply layer as shown in Figure 3. The particles serve as shields to gas flow, although non-spherical shapes of the fine particles may also allow the electron emission to be obtained. The spherical particles such as spacers for liquid crystal displays or ball mills having an isotropic geometry are preferred when considering their uniformity in grain boundaries and homogeneous distribution over the film, and lack of aggregation. The diameter of the fine particle should be a size which allows a part of the particle geometry to be exposed, in other words, a size which does not cause the particle to be completely buried in a later step. When the thickness of the insulator layer 13 is so large to an extent that the presence of the particles cannot be observed, then the emission current may decrease. In addition, a smaller grain size is preferred. The material of the fine particules may be an insulator, a semiconductor or a metal. When metallic fine particles are used, there is a possibility for the particles to cause short-circuits in the device, so that it is preferred to eliminate the particles after the formation of the thin-film metal electrode 15.

Thereafter, as shown in Figure 4, an insulator 13, 13a is formed on the electron-supply layer 12 and on the fine particles 20 to form an insulator layer 13 made of a thin film of the insulator. At this point, the insulator is deposited also on the area around the contact between the electron-supply layer 12 and the particle 20, thereby forming the portion of the insulator layer 13 in which the film thickness is gradually reduced from the given thickness of the insulator layer 13. The portion of the insulator layer 13 in which the film thickness is gradually reduced terminates on the electron-supply layer 12 at the edge position B within the island region 14.

A metal 15, 15a is then deposited over the insulator layer 13 and the particle 20 as shown in Figure 5 to form the thin-film metal electrode 15. At this point, the metal is deposited also around the contacting portion of the electron-supply layer 12 and the particle 20, thereby forming the portion of the thin-film metal electrode in which its film thickness is gradually reduced from the given thickness of the thin-film metal electrode 15. The portion of the thin-film metal electrode 15 in which the film thickness is gradually reduced terminates on the insulator layer 13 at the edge position "A". That is, there is a boundary between the particle 20 and the electron-supply layer 12 or the thin-film metal electrode 15, and the film thickness of the insulator layer 13 and thin-film metal electrode 15 are continuously reduced from that boundary toward the contact point between the particle and the electron-supply layer 12. In this way, the island region 14, which is a recess, is formed within the insulator layer 13 and the thin-film metal electrode 15 around the contact plane under the particle 20.

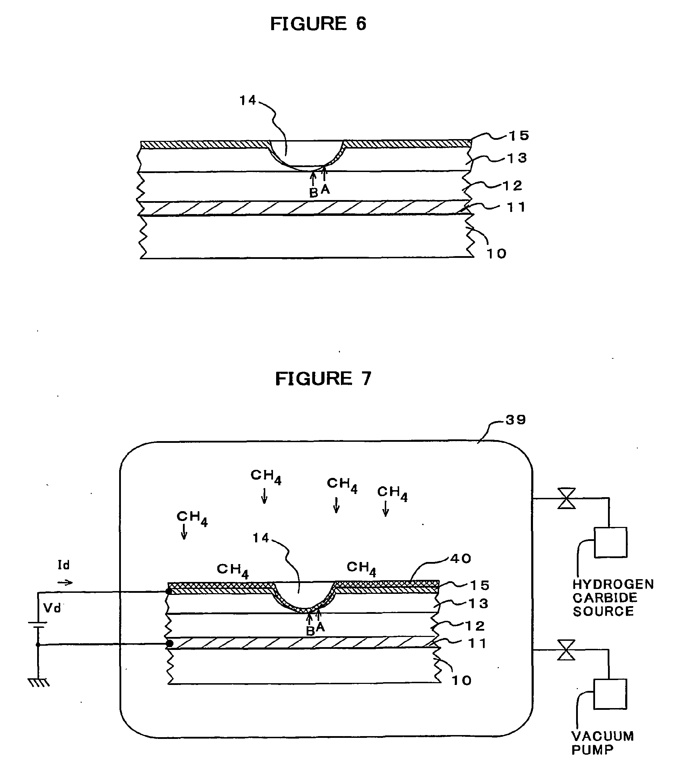

After this thin-film metal electrode formation process, the plurality of particles are eliminated through ultrasonic cleaning so that a plurality of island regions 14 of circular recesses are formed as shown in Figure 6.

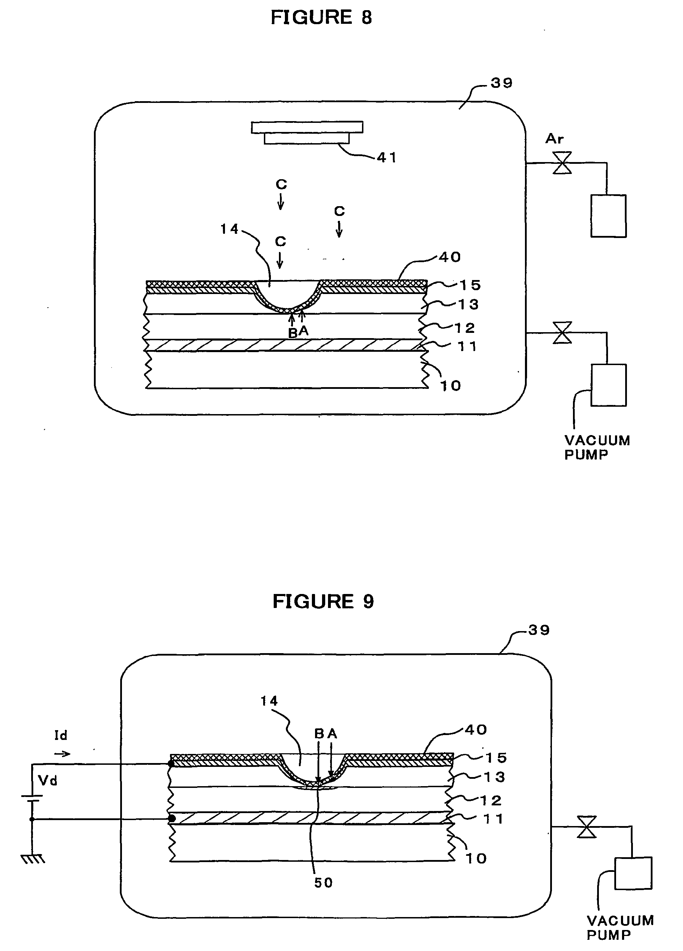

Next, as shown in Figures 7 and 8, a carbon region 40 is formed as a thin film over the island regions 14 and the thin-film metal electrode 15 after the shield elimination step (particle elimination step).

Figure 8 shows a process in which the carbon region 40 is formed as a thin film over the island regions 14 and the thin-film metal electrode 15. As shown in the figure, the substrate on which the recessed island regions are formed is placed in a vacuum chamber 39 provided with a carbon target 41. The carbon region 40 is formed as a thin film also by uniformly depositing it over the island regions 14 and the thin-film metal electrode 15 through sputtering. In this case, the layered carbon region 40 of the thin film has a form of amorphous carbon, graphite and/or diamond-like carbon or the like. To form a thin film of carbon region 40 comprising carbon nano-tube, carbon nano-fiber, carbon nano-horn, carbon nano-coil, carbon nano-plate or the like, the CVD method is effectively used. In addition, it is effective that a catalyst layer comprising Fe, Ni, Co as main components is previously formed on the thin-film metal electrode 15 for the carbon region 40. Furthermore, use of printing method is effective for forming the carbon region 40 regardless of the form of carbon.

Figure 7 shows another process for the formation of the carbon region 40. The substrate on which the recessed island regions are formed is placed in a vacuum chamber 39, and a hydrogen carbide gas such as methane gas is introduced into the vacuum chamber 39. Voltage is applied across the electron-supply layer 12 and the thin-film metal electrode 15 via the ohmic electrode 11 within the hydrogen carbide atmosphere that has been vacuumed to approximately 0.1 to 1 x 10⁻⁶ Torr. In this process, hydrogen carbide within the chamber is adsorbed to or deposited on, or reacted with the entire surface of the thin-film metal electrode 15 and on the insulator layer 13 and the electron-supply layer 12 within the recessed island regions 14, so that a thin film constituting the carbon region 40 is formed. It is preferred to set a voltage application period, and repeat the voltage application process for more than one cycle of the voltage application period.

Next, Figure 9 shows a step to form a crystalline region at a portion of the electron-supply layer 12 in the bottom of the island region 14 (crystallizing step). As shown in the figure, the device substrate on which the island regions 14 are formed as recesses is loaded in a vacuum chamber. The vacuum chamber is decompressed, and then a predetermined voltage is applied across the electron-supply layer 12 and the thin-film metal electrode 15 via the ohmic electrode 11, so that a portion of the electron-supply layer 12 melts with the evolved Joule's heat and cools off. Further, in the case that the electron emitting device is used for a vacuum-sealed product such as a display device, that step for forming the crystalline region may be preformed after the vacuum-sealing step. In this case, it is unnecessary to load the device substrate into the vacuum chamber and decompress the chamber. An example of the conditions for make current flow in the device substrate (crystallizing step) includes a sweep voltage of 1 to 50 V with a sweep rate of 0.001 to 5 V/sec., when the island regions having a diameter of 0.1 to 10 µm are provided on the substrate in a density of 100 to 10,000 pieces/mm². In this case, the time limit may be not provided for the current to be applied sustained at the highest voltage value. However, the voltage conditions for flowing current the device substrate depends on the bottom of the island region 14, i.e., the size of each electron emitting section, the density of electron emitting sections and the like. In other words, there is provided a predetermined current with application of voltage between the thin-film metal electrode 15 and the electron-supply layer 12 in the step of forming the crystalline region. Since the insulator layer 13 has enough thickness other than the island region 14, electrons provided from the electron-supply layer 12 pass through the island region 14 to the thin-film metal electrode 15. In detail, electrons pass through a contact portion between the electron-supply layer 12 at the bottom without insulator and the carbon region 40 (the carbon layer) in the island region 14. Since the carbon layer services as a conductive passage between edge positions "A" and "B", electrons flow to the thin-film metal electrode 15. Therefore, there occurs concentrated current at the bottom of the island region 14, so that great Joule's heat is generated. Consequently, the portion of the electron-supply layer 12 at the bottom of the island region 14 and adjacent thereto has a high temperature near to or grater than 1414 °C which is the fusion point of silicon constituting the electron-supply layer. The layers other than the island region 14, i.e., the insulator layer 13, the thin-film metal electrode 15 and the carbon region 40 are made of respective materials hard to melt at such high temperature having a fusion point higher than that of silicon. For example, the insulator layer 13 is made of silicon dioxide (SiO₂ having a fusion point of 1722 °C), the thin-film metal electrode 15 of tungsten (W having a fusion point of 3387 °C), the carbon region 40 of carbon (having a fusion point of 3727 °C). In the crystallizing step, the portion of the electron-supply layer in an amorphous state (the bottom of the island region) is phase-transformed into a crystal phase containing silicon as a main component. One of X-ray diffractometry, Raman spectroscopy, and transmission electron microscope (TEM) analysis may identify the crystal phase silicon in general. The present example has been measured by the TEM analysis. At the bottom of the island region in the dark-field image of TEM, a granular image with an intense contrast has been observed at particular to the crystal phase. Therefore, the poly-crystal phase portion in the electron-supply layer at the bottom of the island region has been confirmed. Thus the crystalline region includes a crystal phase and a poly-crystal phase.

It is very effective to control the density of the island regions in an electron emitting device in order for adjustment of the emission current thereof, because the emission current of the electron emitting device rises in substantially proportion to the density of the island regions thereof. For preparation of the electron emitting device capable of a high emission current, the island regions in such a device may be provided in a density of 10,000 to 100,000,000 pieces/mm². Further, the electron emitting device having the high density of the island region has an ability of emitting light by a low applied driving voltage in comparison with an electron emitting device having a low density of the island under the conditions for obtaining the same density of emission current. In addition, the higher the density of the island region is raised, the higher the heat release value per a unit area of the electron-supply layer becomes during the electrification in the crystallizing step. Accordingly, the electron emitting device having the high density of the island region enables to perform the crystallizing step with a low applied voltage to save electricity in the manufacturing steps. Moreover, since the ascending temperature of the substrate is caused by the high density of the island region during the electrification in the crystallizing step, it should be noted that heat-resistant materials are required for the substrate to prevent from cracking thereof due to high temperature. Further, it is effective to provide a cooling device in contact with the substrate against the cracking thereof.

A sweep rate ranging from 0.001 to 5 V/sec. of the voltage to be applied across the electron-supply layer and the thin-film metal electrode with is desirable for the crystallizing step to obtain a stable electron emitting device. In addition, a sweep rate higher than the particular range may be employed although the obtained device is inferior to the former only in the stability of electron emission. In this case, the applied voltage is supplied in pulsating current with a pulse width to the substrate during the crystallizing step. The sweep rate is a factor to decide the crystallization of amorphous state. Namely, when the sweep rate is low, the island regions are readily heated even with a lower applied voltage to crystallize the amorphous state of the electron-supply layer, since the outside of the island region and the substrate are heated due to heat conduction. There is also a method for crystallization with a low applied voltage in that the device substrate is previously heated up to a temperature higher than the room temperature before and during the crystallizing step with radiation such as a lamp, laser or the like particularly, at the island regions and adjacent thereto. Further, the highest voltage to be applied is selected from 1 - 50V preferably. In addition, a voltage to be applied of 50V or more is similarly effective as far as the emission current of the electron emitting device is desired. In this case, the temperature of the substrate ascends during the electrification. Therefore, the substrate should be made of heat-resistant material and alternatively, to prevent from cracking thereof due to high temperature, a cooling mechanism provided in contact with the substrate is effective.

According to such a step for forming the crystal phase, Joule's heat caused by the application of electricity facilitate to crystallize a portion of the previously formed amorphous electron-supply layer into a crystal phase portion. Therefore, the crystallization in a small area is enabled without using any large-scale equipment such as a laser-annealing apparatus.

In general, it is technologically difficult to form a silicon layer of crystal phase on a glass substrate at a low temperature. However, the formation of the crystalline silicon on the glass substrate is practicable, for example, an amorphous silicon layer is previously formed on the glass substrate and then the laser-annealing process, i.e., the heat treatment is conducted with the excimer laser. This practicable process is very expensive for crystallizing of silicon. In the example mentioned above, there is no use of laser-annealing apparatus causes and therefore a low cost formation of crystal phase is realized.

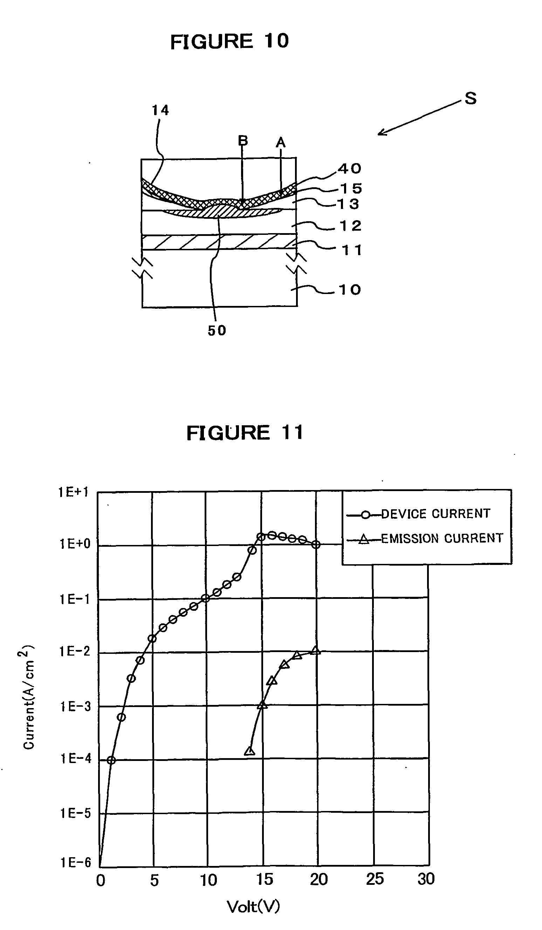

As shown in Figure 10, a portion of the crystalline region 50 may be deformed into a convex profile or, undulation in the smooth interface of layers, because thermal expansion, distortion and relaxation or the like occur during the crystallizing, though the bottom of the island region 14 is concave in general. Even if the convex crystalline region 50 or undulation is formed, it is confirmed that the completed electron emitting device similarly demonstrates an advantageous effect of electron emission as discussed above.

There are some advantageous effects caused by use of amorphous silicon for the electron-supply layer 12. First, the amorphous silicon layer exhibits a moderate high electrical resistance during the energizing to prevent the insulation breakdown. Also the amorphous silicon layer is a great contribution in the emission current stability of the completed electron emitting device. In addition; the crystal phase portion of the electron emitting section, i.e., the bottom of the island region 14 in the electron-supply layer 12 is preferable. This is because the crystal phase has an electrical resistance lower than that of the amorphous phase and there is little voltage-drop in the crystal phase, so that the driving voltage may be reduced or electrons are injected into the electron emitting section with a low energy loss. Thus the crystalline region 50 has a area smaller than that of the island region 14 preferably.

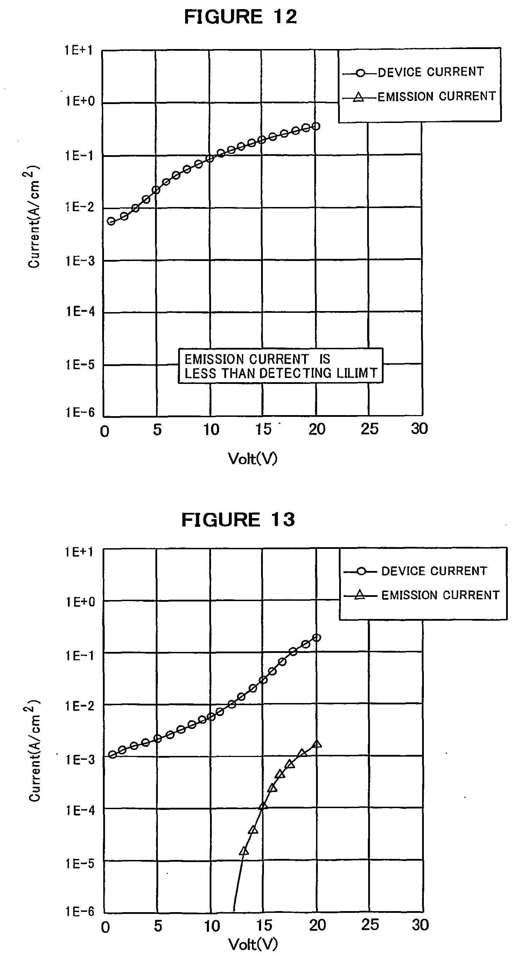

A significant effect of advantageous voltage versus current characteristics is obtained by the local energizing in the manufacturing of the electron emitting device in which a portion of an initial amorphous phase of the electron-supply layer 12 is phase-transformed into a crystal phase portion. Figure 11 shows a voltage versus current characteristics for making the crystalline region (crystallizing step) in the electrifying step in that electricity is conducted across the electron-supply layer 12 and the thin-film metal electrode 15. Further, Figure 12 shows a voltage versus current characteristics of an electron emitting device without performing the crystallizing step (i.e., electrifying step). Figure 13 shows a voltage versus current characteristics of an electron emitting device resulting from performing the crystallizing step in the manufacturing. The pulse voltage source of 60 Hz and duty ratio of 1/120 has been used for the electrifying step. Those results show that the crystallizing step contributes the electron emission performance of the electron emitting device.

After the crystallizing step, the electron emitting device has a portion exhibiting a negative resistance, although the electrical resistance of the electron-supply layer 12 becomes low caused by the crystallizing. Contrary, the electrical resistance of the portion becomes high. The mechanism of this phenomenon is unclear, but some suppositions are as follows.

There is a fluctuation of volume or deformation caused by the phase transition in the crystallization such as a change of density, thermal expansion, relaxation of distortion or the like in the crystalline region. The deformed portion in the electron-supply layer provides discontinuous portions in a molecular order into the insulator layer 13, the thin-film metal electrode 15 or the carbon region 40 (carbon layer). The discontinuous portions cause cut off the electrifying passage at many places to increase the electrical resistance of the region. The emission of electrons from the discontinuous portions is assumedly facilitated.

Alternatively, there is an assumption in that Joule's heat and an electric field generate the trap of electrons at sub-bands existing in the insulator layer 13. The insulator of SiOₓ used for the insulator layer has sub-bands caused by impurities and defects, in fact, and exhibits some electrical conductivity. When the sub-bands trap electrons, it is natural that the electrical resistance increases. Further, in the case that the traps exist adjacent to the surface of the insulator layer, such surface and near thereto have a high electrical resistance and then an electric field is strongly concentrated to the surface and near thereto of the insulator layer. At this time, it is assumed so that injected electrons become hot-electrons under the concentrated electric field so as to easily move for emission, alternatively, an electric field emission easily occurs because of the great electric field.

In both the cases, the factor of increase of the electrical resistance is the heat and electric field provided in the electrifying step. As a result, the portion of the electron-supply layer (the bottom of the island region 14) is crystallized to influence the electron emission of the device. This effect of the crystalline region is proved by the experimental result of the voltage-current characteristics for making the crystalline region shown in Figure 11, in which the voltage value at which the negative resistance begins coincides with the voltage value at which the emission current starts to increase in an exponential function form. The generated great Joule's heat may have destroyed the electron emitting device. However, absorption of heat caused by the crystallization assumedly consumes energy to prevent such destruction.

The size in area of the crystalline region 50 is 0.1% or more than that of the island region 14 in the planar direction preferably. It is hard to obtain merits in case of less than 0.1%. In the experiences, it has been evidenced that the crystalline region 50 has an area of 300% of the island region 14 at the maximum value. Further, the size in depth of the crystalline region 50 is 0.1% or more than that of the electron-supply layer 12 in the thickness direction preferably. It is hard to obtain merits in case of less than 0.1%. In the experiences, it has been evidenced that the crystalline region 50 has a depth of 100% of the electron-supply layer 12 (the same depth) at the maximum value.

In another example, a pn junction structure made of semiconductor Si may be provided in the crystalline region 50 of the bottom of the island region 14.

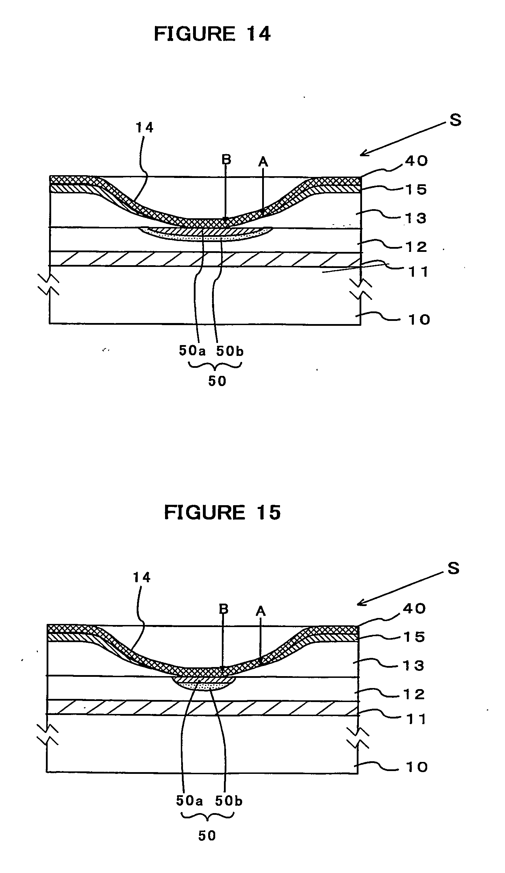

As shown in Figures 14 and 15, in the Si electron-supply layer 12, the p-type crystal semiconductor layer 50a is doped with an element of group IIIb, and the n-type crystal semisonductor layer 50b is doped with an element of group Vb, so that the electron emitting device has a rectification function based on the pn junction 50a, 50b made of semiconductor Si. The dopants are individually added to the respective layers while amorphous Si is deposited for the electron-supply layer through sputtering, after that, the doped portions are crystallized by local Joule's heat in the crystallizing step. In this way, the crystalline region 50 of the bottom of the island region 14 has the pn junction structure (50a, 50b) as a built-in rectifier.

In addition to the foregoing doping process including the formation of p-type crystal semiconductor layer 50a previously doped, there is a method for producing the pn junction structure. The ion implantation process is preformed with the dopant elements prior to the deposition of the carbon region 40 in the thin film form, in which the dopant elements are ion-implanted into the exposed surface of the electron-supply layer 12 in the bottom of the island region 14. In this way, the pn junction structure (50a, 50b) is provided in the crystalline region 50 of the bottom of the island region 14. After that, the carbon region 40 is layered in the form of thin film on the island region 14, the electron emitting device is completed.

Since the pn junction is made of crystal phase silicon, the built-in rectifier has a high carrier mobility and exhibits a preferable rectification characteristics. The present example may overcome the technological difficulty to form the crystal silicon layer on the glass substrate at a low temperature. Namely, the present example need not the conventional formation in which an amorphous silicon layer previously is made and then laser-annealed for crystallization through the heat treatment with use of the laser-annealing apparatus such as the excimer laser. As a result, the present example realize a low cost formation of the crystal phase pn junction i.e., built-in rectifier.

### [Example 1]

First, a flat glass substrate for the use as the backside substrate was cleaned and sufficiently dried, and on its one surface, an ohmic electrode of TiN was formed to a thickness of 220 nm through reactive sputtering with the introduction of nitrogen. Thereon, an electron-supply layer of Si to which B was doped to 0.45 atm% was formed in a thickness of 5000 nm. In this way a plurality of electron-supply layer substrates were fabricated.

Particle-sprayed substrates were fabricated by spraying fine particles on the electron-supply layer of the substrates. In this example, spherical particles (also simply referred to as spacers) having a diameter of 1.0 µm were used. The material of the particles was SiO₂, and the distribution range of the diameters of the particles was extremely small. For the dispersion of the particles, a known spacer spray method employed in the fabrication of liquid crystal display apparatus was used. Among the available methods including dry-spray type methods and wet-spray type methods, a wet-spray method was used for this device.

The spherical particles were dispersed within ethyl alcohol and sufficiently stirred so that they do not cling together. This spray solution was then applied to the electron-supply layer of Si by spin coating, and ethyl alcohol was eliminated. In this way, the spherical particles were homogeneously coated on the Si electron-supply layer. The distribution density of the particles on the Si electron-supply layer was approximately 1000 pieces/mm². In this way, a plurality of such particle-sprayed substrates, each having particles within recesses formed by island regions, were formed.

An insulator layer of SiO₂ was formed in a thickness of 330 nm via reactive sputtering with the introduction of oxygen. At this point, the particles were exposed on the surface. SiO₂ was of course formed also on the surfaces of the particles. The sections near the contact points (grain boundaries) between the particles and the electron-supply layer were the areas under the overhang portions, so that the layer in that sections was deposited by "go-around" of the sputtering gas, and the film thickness of the insulator layer was gradually reduced toward the contact points.

Thereafter, a mask having a pattern of a thin-film metal electrode was placed on the SiO₂ insulator layer, and the thin-film metal electrode made of tungsten (W: fusion point of 3387 °C) was formed in a thickness of 60 nm. In this way a plurality of device substrates of the electron emitting devices were provided. The sputter etching may be performed over the insulator layer before forming the thin-film metal electrode. The sputter etching is preferred because the interfaces between the particles and the insulator layer would be etched and reformed by this sputter etching, and this would allow the electrode material to go around more effectively to reach the interfaces during the metal thin film formation. As a result, more effective electron emission can be promoted. When the sputter-etching was performed, ring-like trails reflecting the shape of the particles were remained on the device surface. However, no surface treatment for the insulator layer may be performed prior to the formation of the thin-film metal electrode. For all devices of the present example, the sputter etching was performed prior to the formation of the top thin-film metal electrode. In addition to the thin-film metal electrode made of W, the various device substrates were manufactured to comprise thin-film metal electrodes made of molybdenum (Mo: fusion point 2610 °C), platinum (Pt: fusion point 1772 °C), and gold (Au: fusion point 1064 °C) by sputtering respectively.

The sprayed particles were then eliminated from the substrates, thereby forming a plurality of the device substrates as the electron emitting devices having the recessed island regions without the particles. The elimination of the particles from the electron emitting device substrates was performed through ultrasonic cleaning with the use of isopropyl alcohol. As for the cleaning solution, water, acetone, ethanol or methanol may also be used.

A carbon layer (carbon region) was then entirely deposited at a thickness of 20 nm on the plurality of recesses of the island regions and the thin-film metal electrode of each substrate through the sputtering method using a carbon target.

The electrifying step was preformed for each precursor of electron emitting devices in such a way that a predetermined device voltage was applied across the thin-film metal electrode and the ohmic electrode. This is a step to form the crystalline region in the electron-supply layer (crystallizing step). After the crystallizing step, the surface of every electron emitting device was observed. It was found that, in the electron emitting device having the thin-film metal electrode made of Au, the thin-film metal electrode portion was melted and cohered partly. This fact is understood as follows. The electron-supply layer is heated, by Joule's heat caused by the crystallizing step, to a temperature of 1414 °C or near thereto or more than the fusion point of silicon constituting itself at the bottom of the island region and near thereto, at the same time, the thin-film metal electrode is also heated to a temperature of 1064 °C or near thereto or more than the fusion point of Au constituting itself at the bottom of the island region and near thereto. Therefore, the constituting material for the thin-film metal electrode is preferably selected from a group consisting of metal, alloy and compound having an electrical conductivity any of which have a fusion point of silicon i.e., 1414 °C or more. However, any of metal, alloy and compound having an electrical conductivity may be used for the electrode material if such temperature limitation is ignored.

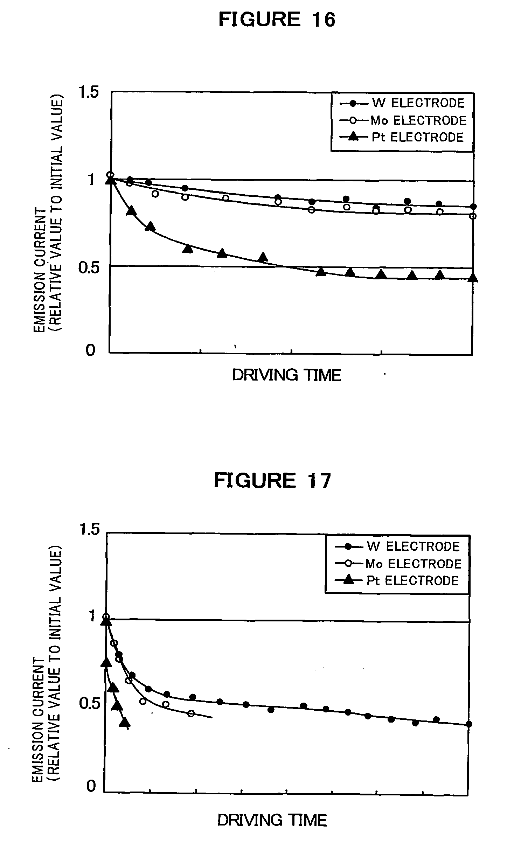

The individual electron emitting devices having the W, Mo, and Pt thin-film metal electrodes respectively which have respective crystalline regions formed by the crystallizing step were investigated in such a manner that a continuos driving was preformed while a predetermined device voltage was applied between the thin-film metal electrode and the ohmic electrode with pulses of a duty factor of 1/120 and then, each of the electron emitting devices measured in emission current. Figures 16 and 17 show changes of average relative emission current of the electron emitting devices with the elapse of time with respect to the initial value. In Figures, the abscissa represents the driving time, while the ordinate represents the relative emission current. Further, the abscissa of Figure 16 is a scale of 1/30 of Figure 17, the latter has a longer time axis.

As shown in characteristics of Figures 16 and 17, the electron emitting device having the W thin-film metal electrode has 10-20 times or more as long as the electron emitting device having the Pt thin-film metal electrode in life time required for one half of the initial value (half-value period). Namely, the electron emitting device having the W thin-film metal electrode exhibits a very small fluctuation with the elapse of time and have a stable characteristics. Further, the electron emitting device having the Mo thin-film metal electrode has 5-10 times or more as long as the electron emitting device having the Pt thin-film metal electrode in the half-value period. Therefore, it was found that the electron emitting device having the thin-film metal electrode made of a high fusion point metal was improved in the fluctuation of emission current and the driving time to have a stability and durability.

Thus, the material constituting the thin-film metal electrode is preferably selected from materials having a fusion point of higher than that of silicon melting in the crystallizing step. In addition, an electrode material having a higher fusion point such as tungsten is used preferably to improve the stabile driving time of the device.

### [Other examples]

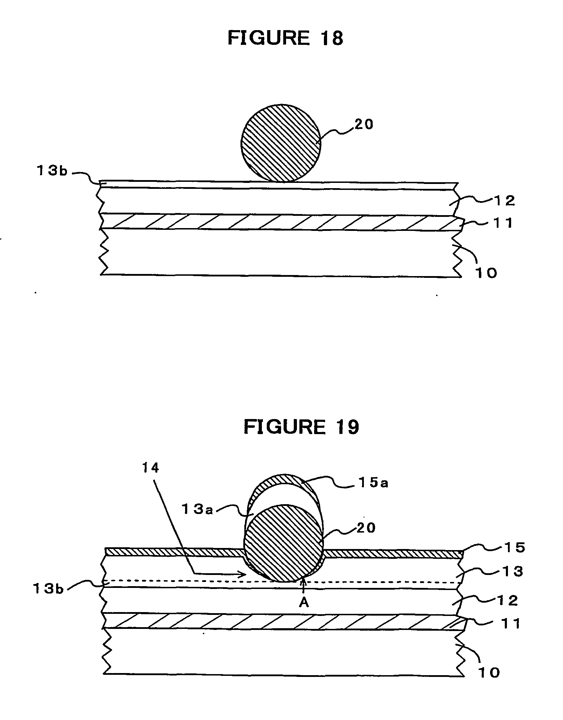

Although the fine particles 20 have been explained as being placed in contact with the electron-supply layer 12 in the case of the above examples, alternatively as shown in Figure 18, a preliminary insulator layer 13b may be formed through the sputtering method immediately before the particle dispersion process (Figure 3) and then spherical fine particles 20 are sprayed thereon. After that, the insulator layer 13 is deposited on the preliminary insulator layer 13b and then the thin-film metal electrode 15 is deposited also on the area around the contact between the preliminary insulator layer 13b and the particle 20, as shown in Figure 19. As a result, the island regions 14 is formed to have a layered portion whose film thickness is gradually reduced from the given thicknesses of the insulator layer 13 and the thin-film metal electrode 15. In this way, the fine particles 20 may be isolated from the electron-supply layer 12 by that preliminary insulator layer 13b. In a case where the preliminary insulator layer 13b is provided, its film thickness shall be within a range from several tens to several thousands angstroms. In this way, the risk of producing short circuits between the electron-supply layer 12 and the thin-film metal electrode 15 may be avoided.

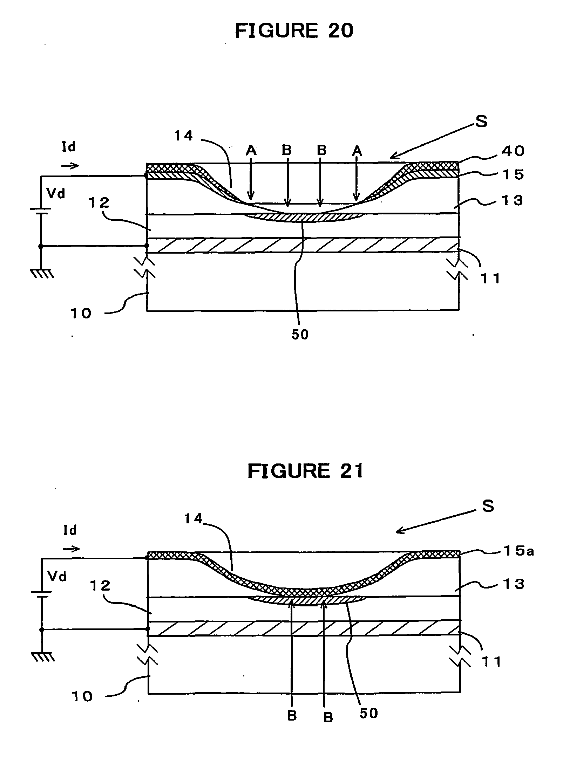

In the case of the above examples, the carbon region 40 has been constituted by a thin film which is deposited so as to entirely cover the thin-film metal electrode 15, insulator layer 13 and electron-supply layer 12. In addition to the above examples, as shown in Figure 20, the carbon regions 40 may be formed so as to be terminated on the insulator layer 13 or on the thin-film metal electrode 15 within the island regions 14. In this case, the formation process of the carbon region is performed immediately after the formation of the thin-film metal electrode 15 (Figure 5), and the carbon region 40 is deposited as a thin film on the thin-film metal electrode 15 prior to the shield elimination process for eliminating the particles. The particles are then eliminated to obtain the structure shown in Figure 20.

Furthermore, as shown in Figure 21, the carbon regions may be provided as a thin-film metal electrode 15a by having them distributed within the thin-film metal electrode. In this case, the shield elimination process for eliminating the particles is performed after the formation process of the insulator layer 13 (Figure 4) to form the recesses, and the formation process of the carbon region is then performed as the thin-film metal electrode formation process in which the thin-film metal electrode 15a containing the carbon region is formed over the insulator layer 13, with carbon or a carbon compound being mixed with the metal by using i.e., a mixed target or by sputtering within a carbon or carbon compound gas atmosphere. In this way, the structure shown in Figure 21 is obtained.

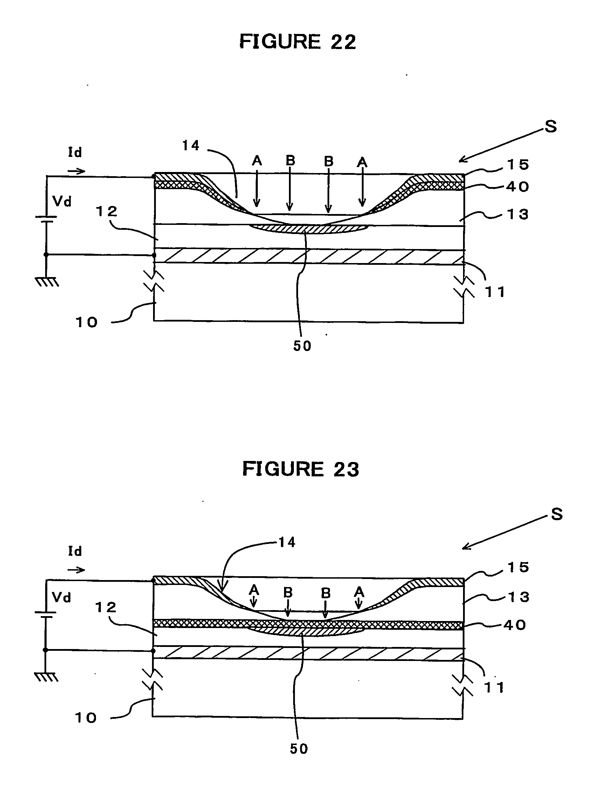

Alternatively, the carbon region 40 may be formed as a thin film deposited under the thin-film metal electrode 15 within the island regions 14 as shown in Figure 22. In this case, the forming process of the carbon region is performed after the formation process of the insulator layer 13 (Figure 4), followed by the formation process of the thin-film metal electrode 15 over the carbon region 40. In this way, the formation process of the carbon region is performed immediately before the formation process of the thin-film metal electrode 15. The particles are then eliminated to obtain the structure shown in Figure 22, in which the carbon region 40 is formed between the thin-film metal electrode 15 and the insulator layer 13.

Furthermore, the carbon region 40 may also be a thin film formed between the electron-supply layer 12 and the insulator layer 13 as shown in Figure 23. In this case, the carbon region 40 is evenly formed over the electron-supply layer 12 after the formation of the electron-supply layer (Figure 2). And, the particles 20 are dispersed over the carbon region 40, and the processes from the formation of insulator layer (Figure 4) to the thin-film metal electrode formation (Figure 6) are then performed. In this way, the carbon region formation process is performed immediately before the dispersion process. Thereafter, the particles are eliminated to obtain the structure shown in Figure 23, in which the carbon region 40 is formed under the insulator layer 13.

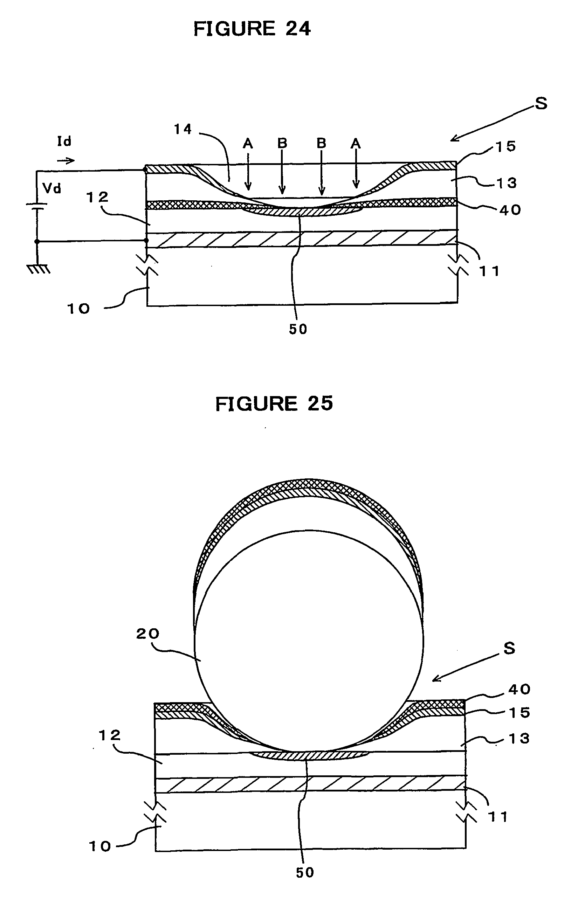

In still another example, as shown in Figure 24, the carbon region 40 may be formed as a thin film having a thickness which is gradually reduced along with the insulator layer 13 and the thin-film metal electrode 15 within the recessed island regions 14. In this case, the carbon region 40 is formed over the electron-supply layer 12 and the fine particles 20 after the dispersion process (Figure 3) of the fine particles 20 on the electron-supply layer 13. And, the processes from the formation of insulator layer (Figure 4) to the thin-film metal electrode formation (Figure 6) are then performed. In this way, the carbon region formation process is performed immediately before the formation process of insulator layer. Thereafter, the fine particles are eliminated to obtain the structure shown in Figure 24, in which the carbon region 40 constituted by the carbon thin film having a film thickness which is gradually reduced within the island regions 14, is formed under the insulator layer 13.

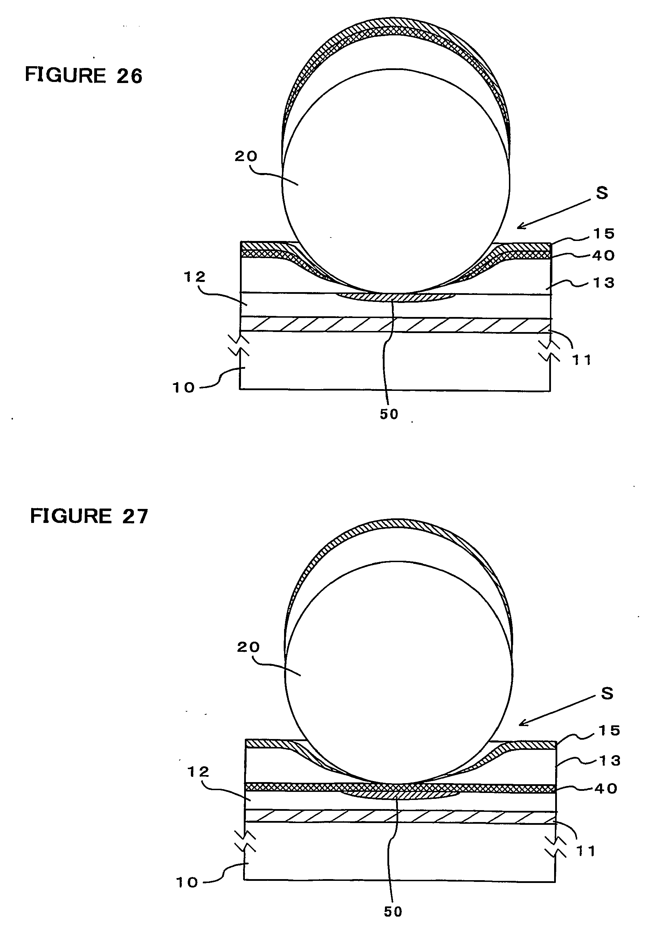

As explained heretofore, in the above examples, each of the island regions 14 is formed so as to constitute a recess on the flat surface of the thin-film metal electrode 15 and the insulator layer 13 through the elimination of a particle 20. In addition, an electron emitting device in which the particles 20 are not eliminated is also possible. For instance, by omitting the final particle elimination process shown in Figure 6, it is possible to manufacture electron emitting devices retaining the particles as shown in Figures 25 trough 28 which respectively correspond to the electron emitting devices shown Figures 20 and 22 through 24. In addition, the device structures shown in Figures 20 to 28 may be deformed similarly to the device shown in Figure 19, in which the preliminary insulator layer 13b may be formed between the electron-supply layer 12 and the insulator layer 13.

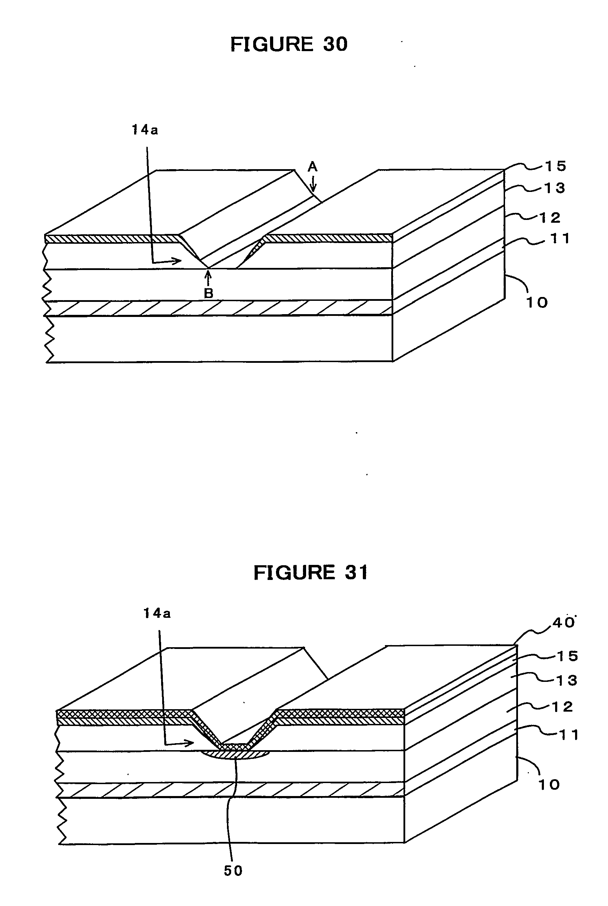

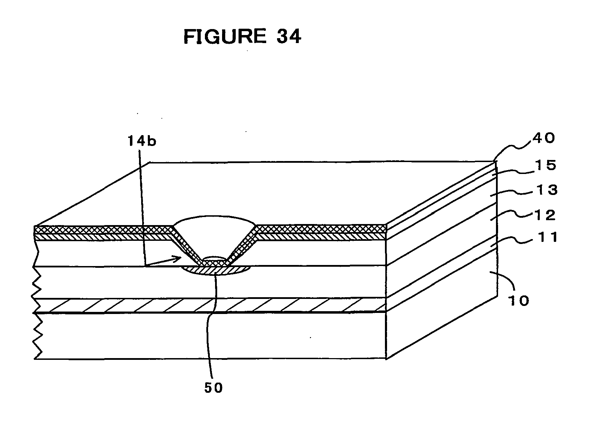

Moreover, although the island regions 14 in the above examples are explained as being crater-like recesses 14 caused by the fine particles, the shape of the island regions is not limited to this particular shape, and the island regions may be formed as trench-like recesses 14a as shown in Figure 31, or cone-shaped recesses 14b as shown in Figure 34. Any arbitrary shapes (i.e., a rectangular shape) and formation methods are applicable for the island regions.

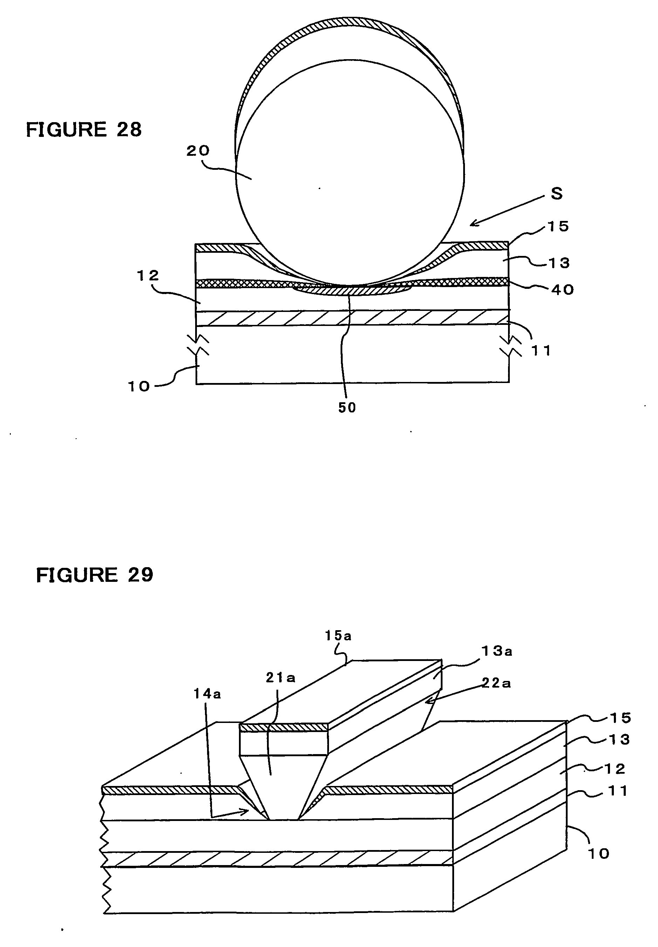

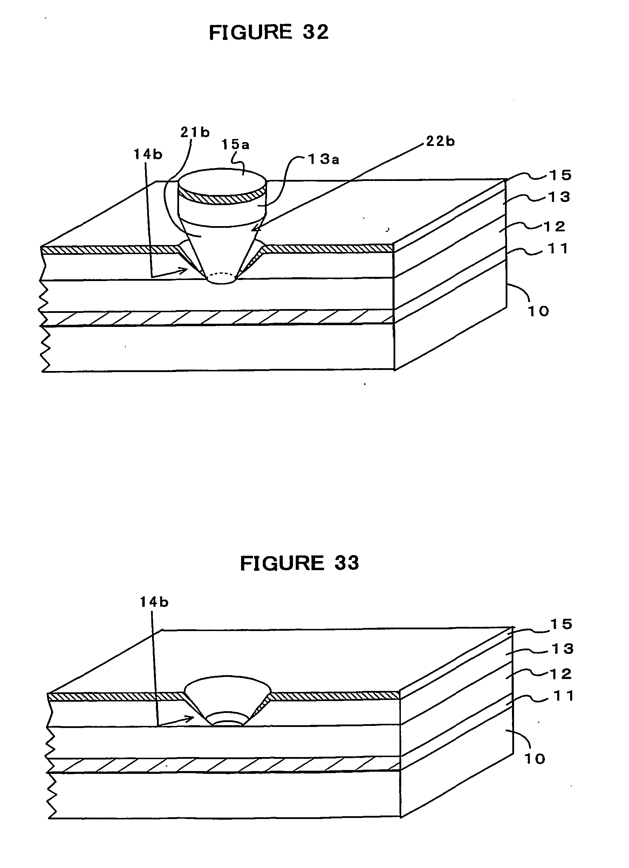

The formation processes of the examples shown in Figures 31 and 34 are identical to the above-explained formation processes for the island regions, except that dot-type or line-type tapered blocks 21a and column-type reverse-tapered blocks 21b shown in Figures 29 and 32 are respectively used in place of the particles. Also, in either of the electron emitting devices shown in Figures 31 and 34, a preliminary insulative layer may be provided, and the reverse-tapered blocks 21a, 21b may be formed thereon in the same manner as the case shown in Figure 19 in which the preliminary insulator layer 13b is provided on the electron-supply layer 12.

The reverse-tapered blocks 21a and 21b are made of an electrically insulating material such as a resist. They project out in a direction normal to the substrate 10, and in their top portions, include overhangs 22a and 22b that project in a direction parallel to the substrate 10. For the resist as the reverse-tapered block material, a novolac-type photo resist may be used. A spin-coat method is used for the application of the resist. After applying the resist to the electron-supply layer 12 using a photo mask, the pre-bake, exposure, post-bake and development processes are performed to form a desired resist pattern on the electron-supply layer. At this point, the pattern may have any arbitrary shape, but it should have a sufficient height from the Si electron-supply layer so that it would not be completely buried within the insulator layer which is to be formed later. The reverse-tapered block is the one having a cross-section of a reverse-tapered shape. In addition, the taper angle is arbitrary, and even the blocks are not necessarily be tapered blocks.

After forming the reverse-tapered resist pattern, the insulator layer 13 and the thin-film metal electrode 15 are deposited so as to form island regions 14a and 14b in which the film thicknesses are gradually reduced, thereby forming the substrates shown in Figures 29 and 32. The reverse-tapered blocks 21a and 21b are eliminated by given agents respectively to obtain substrates, each of which having a plurality of island regions constituting the recesses shown in Figures 30 and 33. Thereafter, carbon regions 40 made of at least of carbon, a mixture containing carbon as a main component and a carbon compound is formed over the electron-supply layer 12, insulator layer 13 and thin-film metal electrode 15 in the same manner as in the previous examples, thus an electron emitting device is constituted. It is also possible to form an electron emitting device in which the reverse-tapered blocks 21a or 21b are not eliminated, but retained instead at the centers of these recesses formed by the island regions as shown in Figure 29 or 32, and the carbon regions 40 are formed thereon.

### [Light-Emitting Device Using Electron-Emitting Device]

In a case where the electron emitting device S is used as a light-emitting device, the device substrate 10 of the electron emitting device S is used on the backside as a first substrate, and a translucent second substrate 1 such as one made of glass is retained as the front side substrate via a vacuum space 4 as shown in Figure 1. On the interior surface of the second substrate 1, a translucent collector electrode 2 made of indium tin oxide (also referred to as ITO), tin oxide (SnO), zinc oxide (ZnO) or the like and a phosphor layer 3R, G, B are formed. As the material of the device substrate 10, a ceramic such as Al₂O₃, Si₃N₄, BN or the like may also be used as well as glass.

As shown in Figure 1, the thin-film metal electrode 15 of the electron emitting device at the surface is a positive potential Vd, while the ohmic electrode 11 at the backside thereof is the ground potential. When a voltage Vd of, for example, approximately 50 V is applied between the ohmic electrode 11 and the thin-film metal electrode 15, to emit electrons to the vacuum space via the electron emitting section formed by the electrifying step. The electrons are emitted or scattered with an angle from the bottom of the island region 14. In this case, the device structure shown in Figure 1 has an electric field in the lens form at the space over the island region 14, so that the movement of emitted electrons is restricted along the normal line to the surface thereof. As a result, the emitted electrons having a very small angular scattering are obtained.

The electrons "e" (emission current Ie) emitted from the recess formed by the island regions 14 are accelerated by the high acceleration voltage Vc (i.e., approximately 5 kV) applied to the opposing collector electrode (transparent electrode) 2, and collected to the collector electrode 2. In a case where the phosphor 3 is coated on the collector electrode, a corresponding visible light is emitted.

Electron-emitting devices were fabricated using an electron-supply layer made of boron (B)-doped Si, and characteristics are examined.

### [Example 2]

Electron-emitting devices were fabricated in the same manner as the first example in which carbon films were deposited in thickness of 20 nm on respective substrates through a sputtering method using a carbon target. As comparative samples, a plurality of device substrates of electron emitting devices were fabricated by the same processes as the above example except that the thin films forming the carbon regions were not provided to those samples. Separately, transparent substrates 1 made of transparent glass having respective ITO collector electrodes and phosphor layers provided on thier interior surface were fabricated for each device.

The above respective device substrates and the transparent substrates were placed in parallel, facing each other, with the use of spacers so that they are held at 5 mm apart, and the space therebetween was vacuumed to 10⁻⁷ Torr Pa to have the electron emitting devices constitute light-emitting elements.

While the voltage of 35 V was applied between the thin-film metal electrode and the ohmic electrode in each of fabricated light-emitting elements (the electron emitting devices) and the comparative samples, measurements were performed for diode current Id, emission current Ie and the efficiency (Ie/Id) of the elements having carbon-type film layers in various thicknesses.

Those electron emitting devices according to the second example, having recessed island regions covered by carbon-type films by sputtering had characteristics higher than the comparative samples by two orders, indicating significant increase in their emission current. In this.second example, devices capable of providing emission current over 4 x 10⁻² A/cm² and emission efficiencies over 6% were obtained.

### [Other Structures of Electron-Emitting Devices]

In the above examples, the electron emitting device was explained as having recesses or trench-like regions, in which the film thickness is gradually reduced toward the center of the island regions 14. In addition, the device may have island regions in which the insulator layer and the thin-film metal electrode gradually reduce together off the center of the island regions or gradually reduce asymmetrically, or gradually reduce as a flat section.

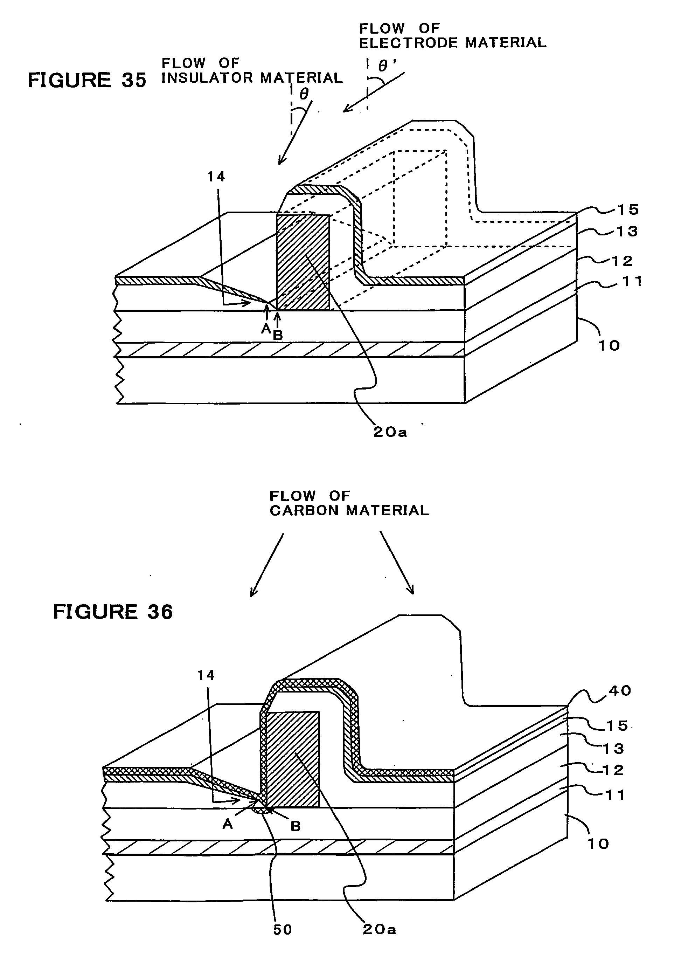

For example, Figure 35 shows another example. The island region 14, in which the film thicknesses of the insulator layer 13 and the thin-film metal electrode 15 gradually reduce together toward a shielding wall 20a, may be provided on one side of a trench-like recess.

The island region 14 shown in Figure 35, which constitutes a portion of the trench-like recess, may be formed as follows. First, a shielding wall 20a made of a resist or the like is formed in the same manner as the line-type tapered block 21a shown in Figure 29 on a substrate 10 having an ohmic electrode 11 and an electron-supply layer 12 sequentially formed thereon. An insulator layer 13 is then formed through the sputtering method. The surface of the electron-supply layer 12 on the substrate 10 is so disposed to have a tilt relative to the flowing direction of the sputtered insulating material in this sputtering process. Thus, the resultant insulator layer 13 would have, on one side of the shielding wall 20a, a portion in which a smaller amount of insulating material is deposited, or a portion in which the thickness of the insulator layer is gradually reduced toward the shielding wall 20a. In the next process, the surface of the insulator layer 13 on the substrate 10 is so disposed to have a tilt relative to the flowing direction of a sputtered thin-film metal electrode material. Then, the resultant thin-film metal electrode 15 would have, on one side of the shielding wall 20a, a portion in which a smaller amount of the thin-film metal electrode material is deposited, or a portion in which the thickness of the thin-film metal electrode is gradually reduced.

As shown in Figure 35, in the so-call "tilted" sputtering processes of the insulator layer and the thin-film metal electrode, when angles of the substrate 10 in a sputtering apparatus are selected so as to allow the incidence angle θ' of the flow of the sputtered thin-film metal electrode material to be larger than the incidence angle θ of the flow of the sputtered insulating material, then the resultant island region 14 would have a structure in which the thin-film metal electrode 15 terminates at an edge "A" located on the insulator layer 13. The insulator layer 13 within the island region 14 terminates at an edge "B" located on the electron-supply layer 12.

Thereafter, a carbon region 40 made of at least of carbon, a mixture containing carbon as a main component and a carbon compound is formed on the exposed portions of the insulator layer 13, the thin-film metal electrode 15 and the shielding wall 20a by sputtering in the similar manner as the above processes. As a result, an electron emitting device as shown in Figure 36 is completed. The shielding wall 20a and the deposits thereon may be eliminated through etching or the like to form the carbon region 40 over a structure in which the electron-supply layer 12 is exposed.

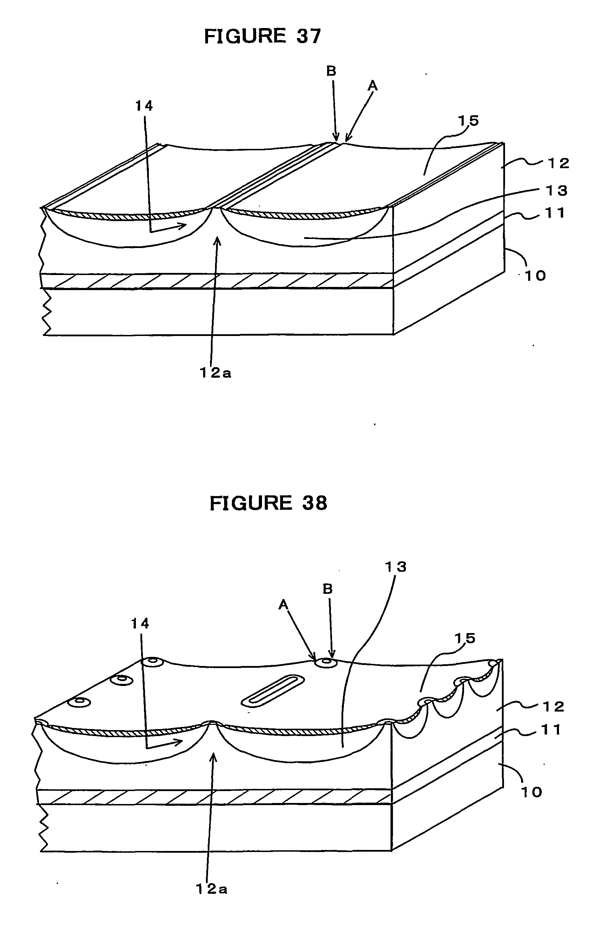

In the above example, the island region was explained as being formed as a recess. In addition, the island region may be formed as a flat or convex structure in which the thicknesses of the insulator layer 13 and the thin-film metal electrode 15 are gradually reduced. For example, in another example, as shown in Figure 37, a flat or convex island region 14 in which the film thicknesses of the insulator layer 13 and the thin-film metal electrode 15 are gradually reduced toward a peak of a spiked portion 12a of the electron-supply layer 12. This flat or convex island region 14 is formed by techniques such as photolithography, etching or the like with the use of a dot-type or linear shield. The spiked portions 12a of the electron-supply layer 12 may be formed as ribs as shown in Figure 37, or individual convex features distributed over the surface as shown in Figure 38. In these cases also, the thin-film metal electrode 15 terminates at the edge "A" located on the insulator layer 13, and the insulator layer 13 terminates at the edge "B" located on the electron-supply layer 12. It is also possible to form a device having a structure in which the electron-supply layer 12 is completely covered by laying the insulator layer 13 over the peaks 12a of the electron-supply layer 12.

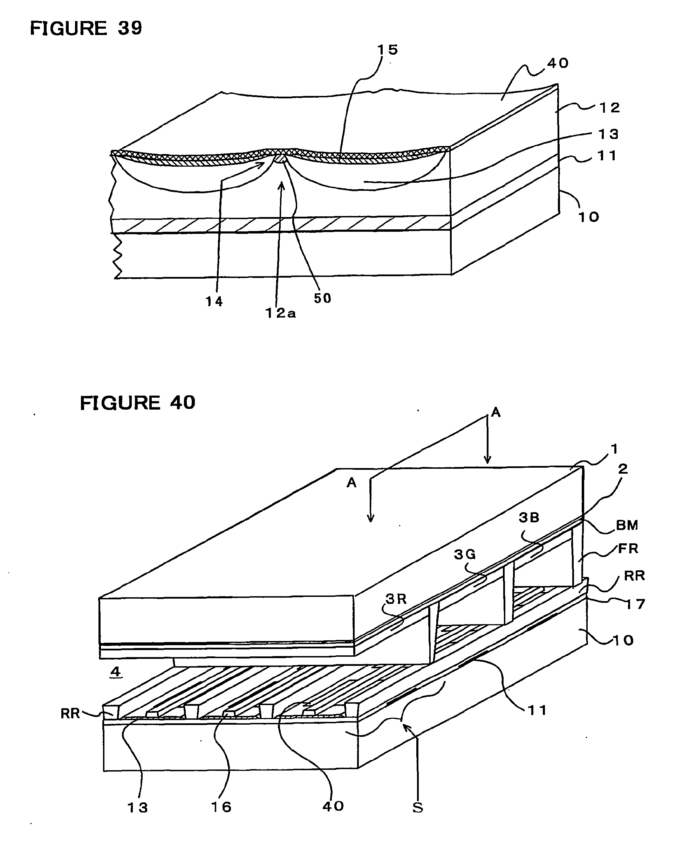

Thereafter, as shown in Figure 39, a carbon region 40, which is made of at least of carbon, a mixture containing carbon as a main component and a carbon compound, is formed on the exposed portions of the insulator layer 13, electron-supply layer 12 and the thin-film metal electrode 15 in the same manner as the prior examples. As a result, an electron emitting deviceis completed.

### [Display Apparatus Using Electron-Emitting Devices]

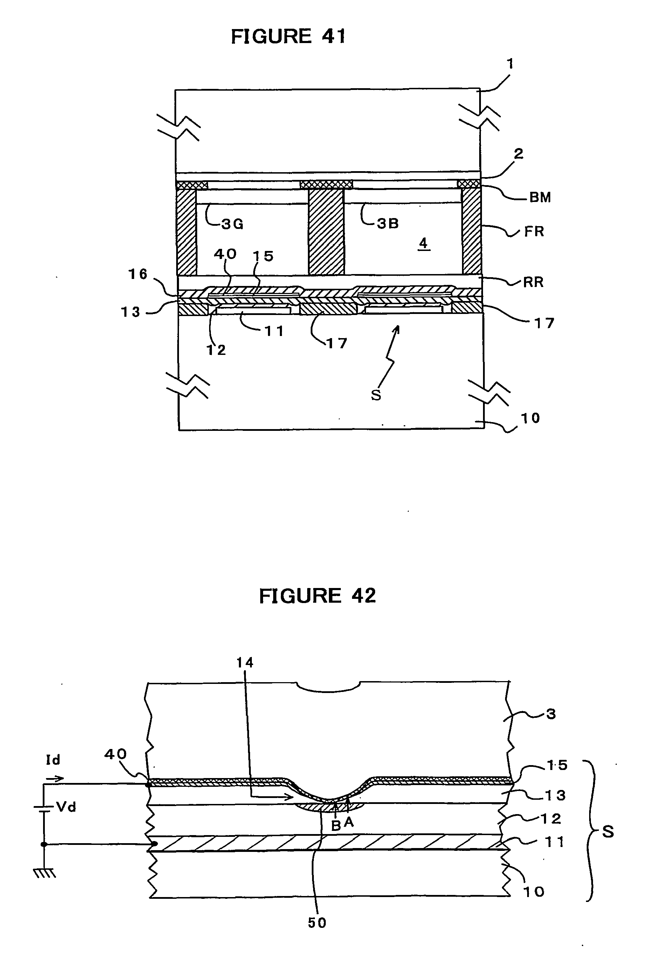

Figure 40 shows a flat panel display apparatus using the electron emitting devices according to an example. Figure 41 shows a partial cross-sectional view of the flat panel display apparatus.

On the interior surface (on the side of a vacuum space 4) of a backside substrate 10, a plurality of ohmic electrodes 11 extending in parallel to each other are formed. Every three ohmic electrodes 11 is grouped as one set, corresponding to red, green and blue color signals R, G and B so as to allow the apparatus to function as a color display panel, so that a specific signal is applied to each of them. A plurality of electron emitting devices S is arranged along a common ohmic electrode 11. A plurality of bus electrodes 16 extend in parallel to each other, each of them being formed on the portions of the carbon regions 40 provided on thin-film metal electrodes 15 of adjoining devices for providing electrical connections, and is vertically extended to ohmic electrodes 11. Each intersection of the bus electrode 16 and the ohmic electrode 11 corresponds to an electron emitting device S. Accordingly, either the simple matrix method of active matrix method is applicable as the driving method of the display apparatus.

An electron emitting device S, as shown in Figure 41, comprises an electron-supply layer 12, an insulator layer 13, a thin-film metal electrode 15 and a carbon region 40 covering island regions, that are sequentially formed on the ohmic electrode 11. The carbon region 40 may face to the interior vacuum space as shown in Figure 1. The device has a plurality of island regions homogeneously distributed, in which the film thicknesses are is gradually reduced in the same direction as the interface with the carbon region 40 such as those shown in Figures 10 to 12, 18 to 28 and 31, 34, 36 and 39. Although the indication of the plurality of island regions as recesses are omitted in Figures 40 and 41, it is assumed herein that a plurality of island regions have been provided homogeneously in the insulator layer 13 and the thin-film metal electrode 15 and the crystalline regions 50 also provided.

It should be noted that insulative supporting members 17 are provided, encompassing individual electron emitting devices S to segregate them into a plurality of electron emitting regions. The insulative supporting members 17 support the bus electrodes 16, and prevent them from being broken. That is, as shown in Figure 41, the supporting members 17 should be formed beforehand with a material having a high insulation performance or electric resistance on the periphery sections outside the areas where the electron emitting devices S are to be formed. These supporting members 17 should be formed in a thickness approximately equal to the final thickness of the electron emitting devices that are formed in the subsequent processes.

In this example, rear ribs (partition walls) RR on the substrate associated with the backside substrate 10 are formed on the insulative supporting members 17 so as to project out from the backside substrate 10 into the vacuum space 4. The partition walls RR are disposed at a given interval. In Figure 40, partition walls RR are formed between adjacent electron emission devices S respectively. In addition, the partition walls RR may be formed at larger intervals, for example, every two or three electron emission devices S, but not illustrated. Further, the partition walls RR are continuously formed in a direction substantially perpendicular to the ohmic electrodes 11 as shown in 40. In addition, it may be formed intermittently by leaving only a part of its top area including the portions for abutting against a front rib (second partition wall) FR formed on the front substrate 1.

Furthermore, it is preferred that the top surface area of this partition wall RR is formed larger than the bottom surface area. In other words, it is preferred to form the partition wall RR so as to include overhangs in its top portion, projecting in a direction substantially parallel to the backside substrate.

Figure 40 illustrates the bus electrodes 16 provided on the thin-film metal electrodes 15 on the backside substrate 10 as having a simple linear shape. Moreover, instead of in the simple linear shape, the bus electrodes 16 is preferably formed to have wider sections on the areas between the thin-film metal electrodes 15 of electron emitting devices and narrower sections on the thin-film metal electrodes 15. Namely, the bus electrodes 16 has a larger width over the areas between electron emitting devices and a smaller width over the devices. In this way, the resistivity of the bus electrodes may be reduced.

As for the materials of the ohmic electrode 11, a material typically used in IC wiring, such as Au, Pt, Al, W or the like may be used. In addition, a three-layer structure of chrome-nickel-chrome, an alloy of Al and Nd, an alloy of Al and Mo or an alloy of Ti and N may also be used for the ohmic electrode as well. Its thickness should be uniform to be able to supply substantially the same amount of current. In addition, although it is not particularly indicated in Figure 40, an auxiliary insulative layer made of an insulator such as SiOₓ, SiNₓ, Al₂O₃, AlN or the like may be provided between the backside substrate 10 and the ohmic electrodes 11. The auxiliary insulative layer serves to prevent the adverse effect from the backside glass substrate 10 (elution of impurities to alkaline components or unevenness in the substrate surface) over the devices.

A chemically stable metal having high electrical conductivity is preferable as the material of the thin-film metal electrode 15. For example, Au, Pt, Lu, Ag or Cu, or an alloy thereof is desirable, particularly metal having a high fusion point such as W, Mo, Re, Ta, Os, Ir, Ru or an alloy thereof for the electrode 15. In addition, the group I and II metals having a small work function φ, for example, Cs, Rb, Li, Sr, Mg, Ba, Ca and the like may be coated or doped to the material of the thin-film metal electrode 15 preferably. Such addition is similarly effective.

As for the material of the bus electrode 16, a material typically used for IC wiring, such as Au Pt, Al, Cu or the like may be used. A sufficient thickness should be selected for providing substantially the same amount of current to each of the devices, and the adequate thickness is between 0.1 µm and 50 µm. However, if the resistivity is tolerable, the material used for the thin-film metal electrode may be used instead of the bus electrode.

On the interior surface (surface facing the backside substrate 10) of the translucent front substrate 1, such as a transparent glass substrate, serving as a display screen, a transparent collector electrode 2 is formed integrally, and a high voltage is applied thereto. When using black stripes or a back metal, it may be utilized as the collector electrode, so that in this case, the formation of ITO is unnecessitated.

Over the collector electrode 2, the second partitions FR are formed in plurality in parallel to the ohmic electrodes 11. Over the collector electrode 2 between the elongated front ribs, phosphor layers 3R, 3G and 3B made of respective phosphors corresponding to R, G and B are respectively formed so as to face to the vacuum space 4. In this way, at the boundaries between each of the phosphor layers, the second partitions FR for retaining a constant spacing (i.g., 1 mm) between the backside substrate and the front substrate are provided, thereby ensuring the segregation of the phosphors on the front-side substrate that correspond to the three primary colors of light R, G and B respectively.

As explained in the above, the flat panel display apparatus using the electron emitting devices has the image display array. The image display array comprises a plurality of light-emitting pixels, corresponding to the electron emitting devices, arranged in a matrix, each constituted as either a red R, green G or blue B light-emitting section. It is of course possible also to form a monochrome display panel by replacing the RGB light-emitting sections with monochrome light-emitting sections.

According to still another example, as shown in Figure 42, an electron emitting light-emitting device 30 can be obtained. An electron emitting device S as implemented in the electron emitting light-emitting device 30, is constructed in a similar manner as the above examples. In the device, an electron-supply layer 12 is formed on a glass device substrate 10 as the backside substrate having an ohmic electrode 11 formed thereon. A plurality of spherical particles is sprayed, or a plurality of linear or column-like reverse-tapered blocks is formed thereon. An insulator layer 13 and a thin-film metal electrode 15 are deposited thereon. The particles are eliminated. A carbon region 40 made of at least of carbon, a mixture containing carbon as a main component and a carbon compound is formed on the recessed island regions 14 and the thin-film metal electrode 15.

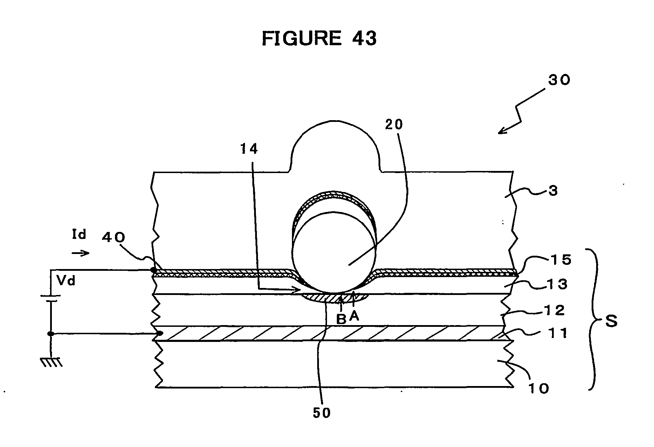

Over this carbon region 40 of the electron emitting device according to the present example, a phosphor layer 3 is directly formed, thereby completing the electron emitting light-emitting device. The phosphor layer 3 directly receives the electrons generated from the island regions 14 of the electron emitting device, and emits a visible light corresponding to the type of the phosphor. The electron emitting light-emitting device 30 may be the one in which the particles 20 (or reverse tapered blocks) are retained, and the carbon region 40 is applied over them as shown in Figure 43.

The phosphor layer 3 may be formed by a spincoating method using a solution of phosphor for the emission of a desired color of light, however the application method is not limited.

It is also possible to provide over the phosphor layer, a translucent front surface substrate such as a glass substrate having a transparent collector electrode provided on its interior surface, mainly for the protection of the device. This would allow the collection of those electrons leaked from the electron emitting light-emitting device. These opposing front and the backside substrates of this electron emitting light-emitting device may be bonded via a transparent adhesive, with the support of spacers and the like at their peripheries.

According to the configuration of this alternate example, the device would have a phosphor layer directly provided on the thin-film metal electrode or the carbon region of the electron emitting device. Therefore, the application of accelerating power is unnecessitated, the driving system of the apparatus may be simplified, and a vacuum space is no longer required, thus, a light-weight and ultra-thin flat panel display apparatus may be obtained. Furthermore, since it would not require excessive spacers, the visibility may also be improved.

### [Another Manufacturing Method of Electron Emitting Device]

There is described below another method of manufacturing an electron emitting device in which another insulative material such as silicon oxide or the like is used for shields in the shield forming step instead of a resist block such as the reverse-tapered blocks 21a and 21b.

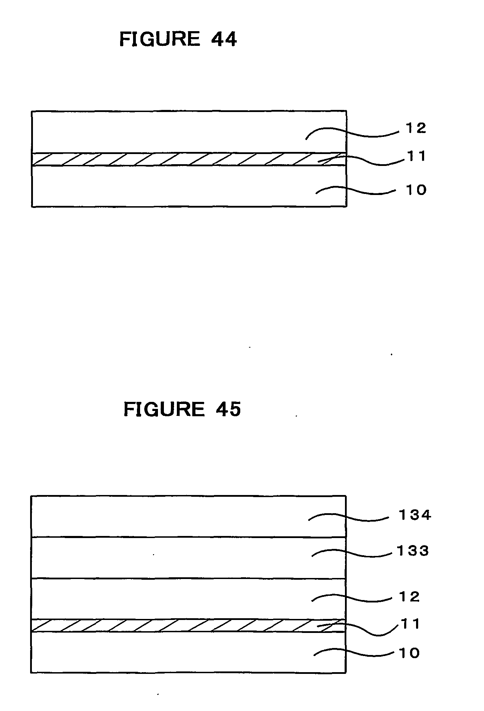

First, the electron-supply layer 12 made of Si is formed as an amorphous phase through sputtering on the substrate 10 having the ohmic electrode 11 formed thereon, as shown in Figure 44.

After that, a silicon nitride (SiNₓ) layer 133 is deposited by CVD on the electron-supply layer 12 and then a silicon oxide layer 134 is deposited by CVD thereon, as shown in Figure 45.

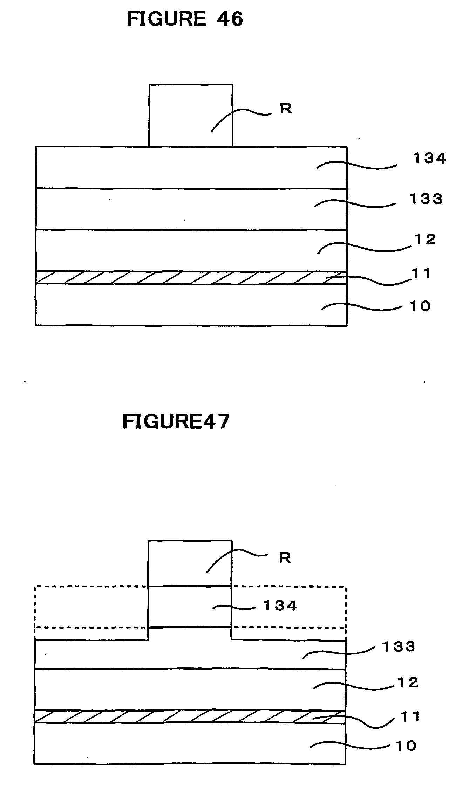

Next, the silicon oxide layer 134 is coated with a resist and then, a patterning is performed by using an exposure step with a predetermined pattern and developing treatments, so that a resist mask R is formed on the silicon oxide layer 134 as shown in Figure 46.

After that, the anisotropic etching is preformed as a dry etching such as RIE, as shown in Figure 47. While the resist mask R protects the silicon oxide layer 134 from the etching gas, the silicon oxide layer 134 is etched perpendicular to the film surface other than the resist mask R. The dry etching is preformed halfway in the silicon nitride layer 133.

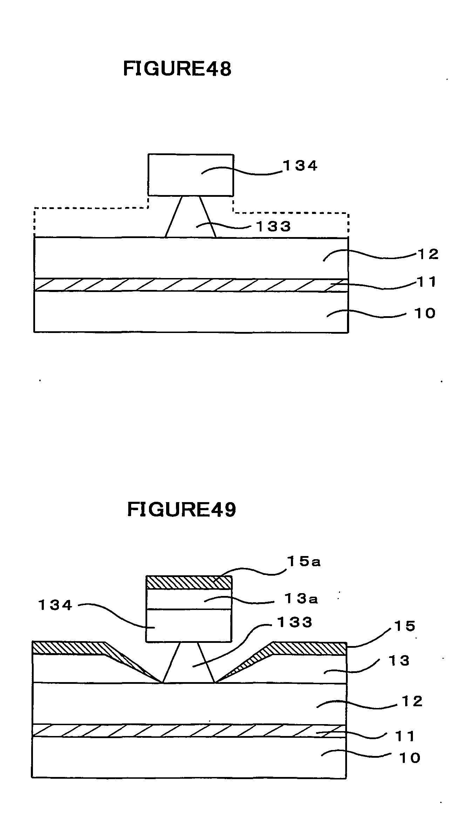

Next, the wet etching (isotropic etching) is preformed with hot phosphoric acid. In this case, the etching rate of silicon oxide to silicon nitride is 1:50 so that the etched silicon oxide is little. As shown in Figure 48, the portion of silicon nitride layer 133 becomes thin beneath the silicon oxide layer 134 in a level direction parallel to the film surface by the isotropic etching, so that the electron-supply layer 12 appears. The wet etching is stopped for obtaining a desired shape of remains of the silicon nitride layer 133. In this way, plural SiNₓ blocks 133 made of silicon nitride are formed at sites according to the island regions to be formed on the electron-supply layer 12.

After that, a SiOₓ insulator 13, 13a is formed on the electron-supply layer 12 and on the blocks 133 of silicon nitride layer to form an insulator layer 13 made of a thin film of the insulator. Next, as shown in Figure 49, tungsten (W) metal 15, 15a is then deposited over the insulator layer 13 and the blocks 13a to form the thin-film metal electrode 15. The portions of the insulator layer 13 and the thin-film metal electrode 15 have film thickness gradually reduced per island region around the SiNₓ block 133.

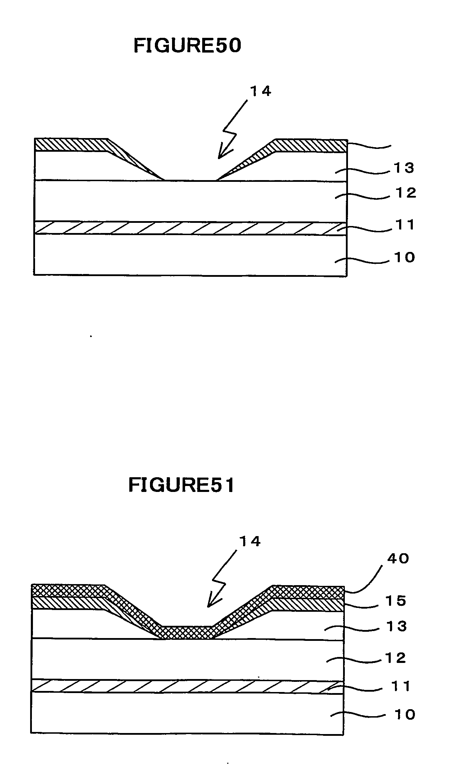

Next, the wet etching is preformed with the hot phosphoric acid so that the silicon nitride blocks are removed as shown in Figure 50, so that each island region 14 is formed.

After that, as shown in Figure 51, a carbon region 40 is formed as a thin film over the island regions 14 and the thin-film metal electrode 15 as similar to the steps shown in Figures 7 and 8.

### [A further Manufacturing Method of Electron Emitting Device]

There is described below a further method of manufacturing an electron emitting device in which reverse-tapered blocks having a different cross-section shape are formed of the resist material.

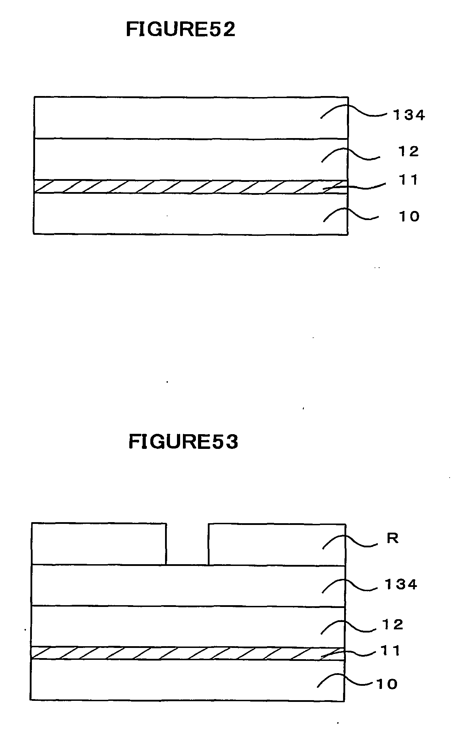

First, the electron-supply layer 12 of Si is formed as an amorphous phase through sputtering on the substrate 10 having the ohmic electrode 11 previously formed thereon. Next, as shown in Figure 52, the silicon oxide layer 134 is deposited by CVD on the electron-supply layer 12.

Next, the silicon oxide layer 134 is coated with a resist and then, a patterning is performed by using an exposure step with a predetermined pattern and developing treatments, so that a resist mask R is formed on the silicon oxide layer 134 as shown in Figure 53.

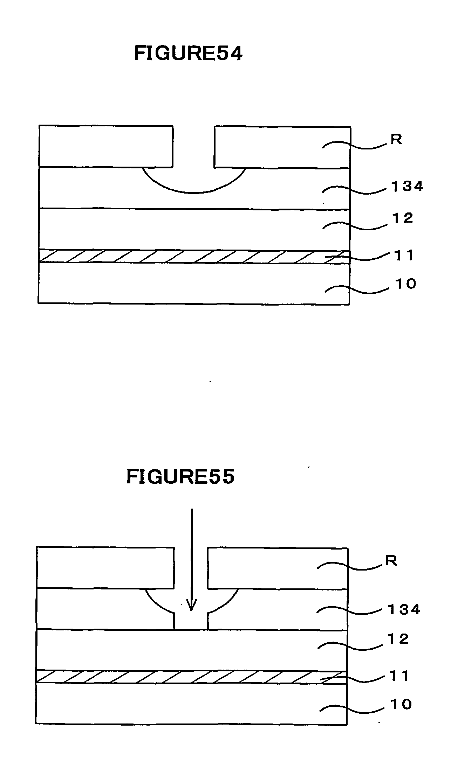

Next, the wet etching (isotropic etching) is preformed with hot phosphoric acid. In this case, as shown in Figure 54, silicon oxide layer 134 is partially etched to remain at a predetermined thickness. Thus, a cavity is formed beneath the resist mask R which expands in a level direction parallel to the film surface.

After that, the anisotropic etching is preformed as a dry etching such as RIE. As shown in Figure 55, while the resist mask R protects the silicon oxide layer 134 from the etching gas, the silicon oxide layer 134 is etched perpendicular to the film surface other than the resist mask R through the cavity. The etched penetrating hole extending from the cavity is formed to lead to the electron-supply layer 12.

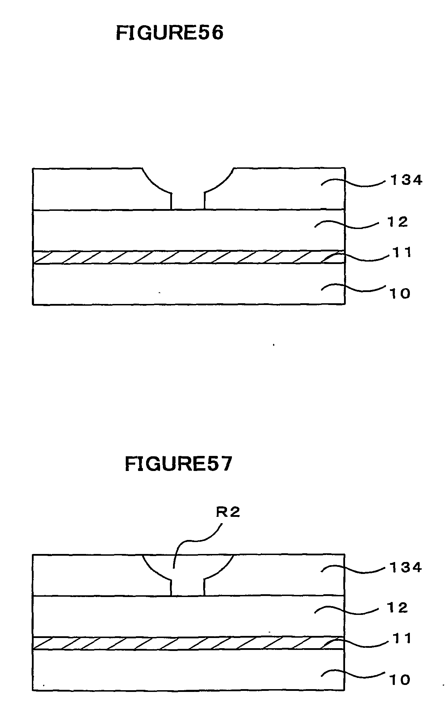

Next, as shown in Figure 56, the resist R remaining on the silicon oxide layer 134 is removed by a plasma asher or the like. Thus, there is formed a funnel-shaped penetrating hole extending to the electron-supply layer 12.

After that, the silicon oxide layer 134 is coated with a resist R2 with which the funnel-shaped hole in the silicon oxide layer 134 is filled as shown in Figure 57.

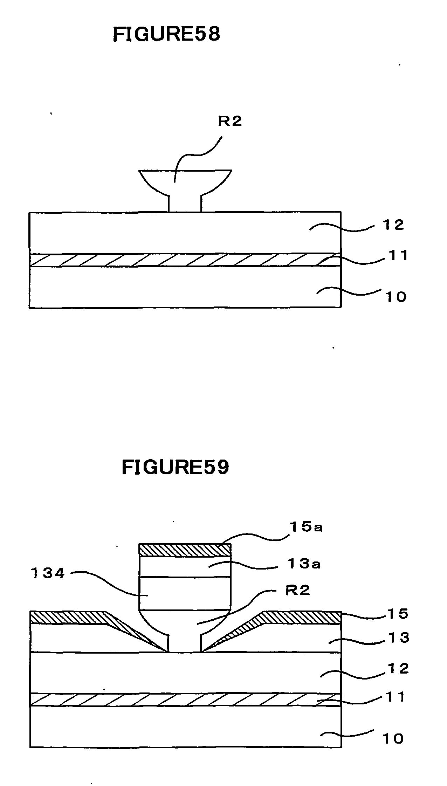

Next, the wet etching is preformed so that the silicon oxide layer 134 is removed as shown in Figure 58. As a result, plural blocks made of resist R2 each having a goblet-shaped cross-section are formed at sites according to the island regions to be formed on the electron-supply layer 12 as shown in Figure 58.

After that, a SiOₓ insulator 13, 13a is formed on the electron-supply layer 12 and on the resist blocks R2 to form an insulator layer 13 made of a thin film of the insulator. Next, as shown in Figure 59, tungsten (W) metal 15, 15a is then deposited over the insulator layer 13 and the blocks R2 to form the thin-film metal electrode 15. The portions of the insulator layer 13 and the thin-film metal electrode 15 have film thickness gradually reduced per island region around the block R2.

Next, the wet etching may be preformed so that the blocks are removed to form the island region 14 and then a carbon region 40 is formed as a thin film over the island regions 14 and the thin-film metal electrode 15 as similar to the steps shown in Figures 50 and 51.

This method has a merit in that the diameter (or circumference) of leg portion of the goblet-shaped block R2 is readily decided by the patterning so that the control of the size of the blocks is easy. The goblet-shaped block is stable since it is difficult to topple it. On the other hand, the reverse-tapered block shown in Figure 32 is dependent on the condition of the light-exposure.

This method has a further merit, the size of head of the goblet-shaped block may be controlled by both the thickness of silicon oxide layer and the period of the wet etching irrespective of the leg portion size of the goblet-shaped block R2.

## Claims

1. A method of manufacturing an electron emitting device (S) having: an amorphous electron-supply layer (12) made of at least one of silicon, a mixture containing silicon as a main component and a silicon compound; an insulator layer (13) formed on said electron-supply layer (12); and a thin-film metal electrode (15) formed on said insulator layer (13), wherein electrons are emitted upon application of an electric field between said electron-supply layer (12) and said thin-film metal electrode (15); wherein said insulator layer (13) having at least one island region (14) in which a film thickness of said insulator layer (13) is gradually reduced; wherein said electron emitting device (S) further comprises a carbon region (40) made of one of carbon and a carbon compound provided on at least one of top, bottom and inside of said island region (14); wherein said island region (14) has a minimum thickness portion and a crystalline region (50) made of at least one of silicon, a mixture containing silicon as a main component and a silicon compound within said electron-supply layer (12) in the minimum thickness portion or near thereto;
said method comprising the steps of:
forming an amorphous electron-supply layer (12) on a substrate (10), wherein said electron-supply layer (12) is made of at least one of silicon, a mixture containing silicon as a main component and a silicon compound;
forming shields (20) on said electron-supply layer (12), each of said shields (20) providing a shade around an area in which the shields (20) contact with said electron-supply layer (12);
depositing an insulator layer (13) over said electron-supply layer (12) and said shields (20) so as to provide said insulator layer (13) as a thin film of an insulator, said insulator layer (13) having island regions (14) each having a minimum thickness portion in which film thickness of said insulator layer (13) is gradually reduced in the proximity of the contact areas of said shields (20); and
forming a thin-film metal electrode (15) over said insulator layer (12), thereby constituting said island regions (14) as electron emitting sections;
**characterized in that** said manufacturing method further comprises a step of implanting dopant ions into the exposed surfaces of said electron-supply layer (12) in the bottom of said island regions (14) to form a pn junction structure (50a, 50b) in said electron-supply layer (12);
providing a said carbon region (40) made of one of carbon and a carbon compound proximal to said island regions (14) after the implantation of said dopant ions; and
electrifying across said electron-supply layer (12) and said thin-film metal electrode (15) to form a crystalline region (50) made of at least one of silicon, a mixture containing silicon as a main component and a silicon compound within said electron-supply layer (12) in the minimum thickness portion or near thereto, wherein said pn junction structure (50a, 50b) is provided in said crystalline region (50).

2. A manufacturing method according to claim 1, further comprising a step of eliminating said shields (20) immediately after said step of forming the thin-film metal electrode (15), and said step of providing said carbon region (40) is performed immediately after said step of eliminating the shields (20), thereby forming said carbon region (40) as a thin film deposited over said thin-film metal electrode (15).

3. A manufacturing method according to claim 2, wherein said step of providing said carbon region (40) is performed by depositing said carbon region (40) as a thin film while applying a voltage between said electron-supply layer (12) and said thin-film metal electrode (15).

4. A manufacturing method according to claim 3, wherein said applied voltage is supplied intermittently according to a voltage application period in which the voltage rises and falls.

5. A manufacturing method according to claim 1, further comprising a step of eliminating said shields (20) immediately after said step of forming the insulator layer (13), and said step of providing said carbon region (40) is performed during said step of forming the thin-film metal electrode (15), thereby having said carbon region (40) distributed within said thin-film metal electrode (15).

6. A manufacturing method according to claim 1, wherein said step of providing said carbon region (40) is performed immediately after said step of forming the thin-film metal electrode (15), thereby forming said carbon region (40) as a thin film deposited over said thin-film metal electrode (15).

7. A manufacturing method according to claim 1, wherein said step for providing said carbon region (40) is performed immediately before said step of forming the thin-film metal electrode (15), thereby forming said carbon region (40) as a thin film deposited under said thin-film metal electrode (15).

8. A manufacturing method according to claim 1, wherein said step of providing said carbon region (40) is performed immediately before said step of forming the insulator layer (13), thereby forming said carbon region (40) as a thin film deposited under said insulator layer (13).

9. A manufacturing method according to any one of preceding claims 6-8, further comprising a step of eliminating said shields (20) immediately after said step of forming the thin-film metal electrode (15), and said step of providing said carbon region (40) is performed immediately after said step of eliminating the shields (20), thereby forming said carbon region (40) as a thin film deposited over said thin-film metal electrode (15).

10. A manufacturing method according to any one of preceding claims 1-9, wherein the step of forming said crystalline region (50) is performed immediately after at least one of said steps of forming said carbon region (40), said thin-film metal electrode (15), and said step of eliminating the shields (20).

11. A manufacturing method according to any one of preceding claims 1-10, wherein said shields (20) are fine particles (20), and said step of forming the shields (20) comprises a step of spraying said fine particles (20) onto said electron-supply layer (12).

12. A manufacturing method according to any one of preceding claims 1-11, wherein each of said shields is an electrically insulating reverse-tapered block (21a, 21b) which projects outwardly in a direction normal to said electron-supply layer (12) and has an overhang (22a, 22b) in a top portion thereof, projecting in a direction parallel to said electron-supply layer (12), and said step of forming the shields includes steps of:
forming a reverse-tapered block material layer on said electron-supply layer (12);
forming thereon a resist mask which allows at least a part of said electron-supply layer (12) to be exposed through a photolithographic method; and
etching out said reverse-tapered block (21a, 21b) having said overhang (22a, 22b) by one of a dry etching method and a wet etching method.

13. A manufacturing method according to any one of preceding claims 1-12, wherein said crystalline region (50) has an area smaller than that of said island region (14).

## Patentansprüche

1. Verfahren zum Herstellen einer Elektronen emittierenden Vorrichtung (S), mit: einer amorphen Elektronenlieferschicht (12), die aus zumindest einem von Silizium, einem Gemisch, das Silizium als eine Hauptkomponente enthält, und einer Siliziumverbindung besteht; einer Isolatorschicht (13), die an der Elektronenlieferschicht (12) geformt ist; und einer Dünnfilmmetallelektrode (15), die an der Isolatorschicht (13) geformt ist, wobei Elektronen bei Anlegen eines elektrischen Feldes zwischen der Elektronenlieferschicht (12) und der Dünnfilmmetallelektrode (15) emittiert werden; wobei die Isolatorschicht (13) zumindest einen Inselbereich (14) besitzt, in welchem eine Filmdicke der Isolatorschicht (13) schrittweise reduziert ist; wobei die Elektronen emittierende Vorrichtung (S) ferner einen Kohlenstoffbereich (40) umfasst, der aus Kohlenstoff oder einer Kohlenstoffverbindung hergestellt und an zumindest einem oberen Teil, einem unteren Teil und/oder innerhalb des Inselbereichs (14) vorgesehen ist; wobei der Inselbereich (14) einen Abschnitt mit minimaler Dicke sowie einen kristallinen Bereich (50), der aus zumindest einem von Silizium, einem Gemisch, das Silizium als eine Hauptkomponente enthält, und einer Siliziumverbindung besteht, in der Elektronenlieferschicht (12) in dem Abschnitt mit minimaler Dicke oder nahe daran besitzt;
wobei das Verfahren die Schritte umfasst:
Formen einer amorphen Elektronenlieferschicht (12) auf einem Substrat (10), wobei die Elektronenlieferschicht (12) aus zumindest einem von Silizium, einem Gemisch, das Silizium als eine Hauptkomponente enthält, und einer Siliziumverbindung besteht;
Formen von Abschirmungen (20) an der Elektronenlieferschicht (12), wobei jede der Abschirmungen (20) einen Schatten um ein Gebiet bereitstellt, in welchem die Abschirmungen (20) mit der Elektronenlieferschicht (12) in Kontakt stehen;
Abscheiden einer Isolatorschicht (13) über der Elektronenlieferschicht (12) und den Abschirmungen (20), um so die Isolatorschicht (13) als einen Dünnfilm aus einem Isolator bereitzustellen, wobei die Isolatorschicht (13) Inselbereiche (14) besitzt, die jeweils einen Abschnitt mit minimaler Dicke besitzen, in welchem die Filmdicke der Isolatorschicht (13) in der Nähe der Kontaktgebiete der Abschirmungen (20) schrittweise reduziert ist; und
Formen einer Dünnfilmmetallelektrode (15) über der Isolatorschicht (12),
wodurch die Inselbereiche (14) als Elektronen emittierende Anteile gebildet werden;
**dadurch gekennzeichnet, dass**
das Herstellverfahren ferner einen Schritt zum Implantieren von Dotiermittelionen in die freiliegenden Oberflächen der Elektronenlieferschicht (12) in dem unteren Teil der Inselbereiche (14) umfasst, um eine pn-Übergangsstruktur (50a, 50b) in der Elektronenlieferschicht (12) zu formen;
Bereitstellen des Kohlenstoffbereichs (40), der aus einem von Kohlenstoff und einer Kohlenstoffverbindung besteht, nahe den Inselbereichen (14) nach der Implantierung der Dotiermittelionen; und
Elektrifizieren über die Elektronenlieferschicht (12) und die Dünnfilmmetallelektrode (15), um einen kristallinen Bereich (50) zu bilden, der aus zumindest einem von Silizium, einem Gemisch, das Silizium als eine Hauptkomponente enthält, und einer Siliziumverbindung besteht, in der Elektronenlieferschicht (12) in dem Abschnitt mit minimaler Dicke oder nahe daran, wobei die pn-Übergangsstruktur (50a, 50b) in dem kristallinen Bereich (50) vorgesehen ist.

2. Herstellverfahren nach Anspruch 1,
ferner mit einem Schritt zum Beseitigen der Abschirmungen (20) unmittelbar nach dem Schritt zum Formen der Dünnfilmmetallelektrode (15), und wobei der Schritt zum Bereitstellen des Kohlenstoffbereichs (40) unmittelbar nach dem Schritt zum Beseitigen der Abschirmungen (20) ausgeführt wird, wodurch der Kohlenstoffbereich (40) als ein Dünnfilm geformt wird, der über der Dünnfilmmetallelektrode (15) abgeschieden wird.

3. Herstellverfahren nach Anspruch 2,
wobei der Schritt zum Bereitstellen des Kohlenstoffbereichs (40) durch Abscheiden des Kohlenstoffbereichs (40) als ein Dünnfilm ausgeführt wird, während eine Spannung zwischen der Elektronenlieferschicht (12) und der Dünnfilmmetallelektrode (15) angelegt wird.

4. Herstellverfahren nach Anspruch 3,
wobei die angelegte Spannung intermittierend gemäß einer Spannungsanlegeperiode geliefert wird, innerhalb der die Spannung zunimmt und abfällt.

5. Herstellverfahren nach Anspruch 1,
ferner mit einem Schritt zum Beseitigen der Abschirmungen (20) unmittelbar nach dem Schritt zum Formen der Isolatorschicht (13), und wobei der Schritt zum Bereitstellen des Kohlenstoffbereichs (40) während des Schritts zum Formen der Dünnfilmmetallelektrode (15) ausgeführt wird, wodurch der Kohlenstoffbereich (40) in der Dünnfilmmetallelektrode (15) verteilt wird.

6. Herstellverfahren nach Anspruch 1,
wobei der Schritt zum Bereitstellen des Kohlenstoffbereichs (40) unmittelbar nach dem Schritt zum Formen der Dünnfilmmetallelektrode (15) ausgeführt wird, wodurch der Kohlenstoffbereich (40) als ein Dünnfilm geformt wird, der über der Dünnfilmmetallelektrode (15) abgeschieden ist.

7. Herstellverfahren nach Anspruch 1,
wobei der Schritt zum Bereitstellen des Kohlenstoffbereichs (40) unmittelbar vor dem Schritt zum Formen der Dünnfilmmetallelektrode (15) ausgeführt wird, wodurch der Kohlenstoffbereich (40) als ein Dünnfilm geformt wird, der unter der Dünnfilmmetallelektrode (15) abgeschieden ist.

8. Herstellverfahren nach Anspruch 1,
wobei der Schritt zum Bereitstellen des Kohlenstoffbereichs (40) unmittelbar vor dem Schritt zum Formen der Isolatorschicht (13) ausgeführt wird, wodurch der Kohlenstoffbereich (40) als ein Dünnfilm geformt wird, der unter der Isolatorschicht (13) abgeschieden ist.

9. Herstellverfahren nach einem der Ansprüche 6 bis 8,
ferner mit einem Schritt zum Beseitigen der Abschirmungen (20) unmittelbar nach dem Schritt zum Formen der Dünnfilmmetallelektrode (15), und wobei der Schritt zum Bereitstellen des Kohlenstoffbereichs (40) unmittelbar nach dem Schritt zum Beseitigen der Abschirmungen (20) ausgeführt wird, wodurch der Kohlenstoffbereich (40) als ein Dünnfilm geformt wird, der über der Dünnfilmmetallelektrode (15) abgeschieden ist.

10. Herstellverfahren nach einem der Ansprüche 1 bis 9,
wobei der Schritt zum Formen des kristallinen Bereichs (50) unmittelbar nach zumindest einem der Schritte zum Formen des Kohlenstoffbereichs (40), der Dünnfilmmetallelektrode (15) und dem Schritt zum Beseitigen der Abschirmungen (20) ausgeführt wird.

11. Herstellverfahren nach einem der Ansprüche 1 bis 10,
wobei die Abschirmungen (20) feine Partikel (20) sind, und wobei der Schritt zum Formen der Abschirmungen (20) einen Schritt zum Sprühen der feinen Partikel (20) auf die Elektronenlieferschicht (12) umfasst.

12. Herstellverfahren nach einem der Ansprüche 1 bis 11,
wobei jede der Abschirmungen ein elektrisch isolierender umgekehrt verjüngter Block (21 a, 21 b) ist, der in einer Richtung normal zu der Elektronenlieferschicht (12) nach außen vorragt und einen Überhang (22a, 22b) in seinem oberen Abschnitt aufweist, der in einer Richtung parallel zu der Elektronenlieferschicht (12) vorragt, und wobei der Schritt zum Formen der Abschirmungen die Schritte umfasst:
Formen einer Materialschicht des umgekehrt verjüngten Blocks an der Elektronenlieferschicht (12);
Formen einer Resistmaskierung daran, die ermöglicht, dass zumindest ein Teil der Elektronenlieferschicht (12) durch ein photolithographisches Verfahren freigelegt ist; und
Herausätzen des umgekehrt verjüngten Blocks (21a, 21b), der den Überhang (22a, 22b) aufweist, durch ein Trockenätzverfahren oder ein Nassätzverfahren.

13. Herstellverfahren nach einem der Ansprüche 1 bis 12,
wobei der kristalline Bereich (50) ein Gebiet aufweist, das kleiner als das des Inselbereichs (14) ist.

## Revendications

1. Procédé de fabrication d'un dispositif émetteur d'électrons (S) ayant :
une couche amorphe de fourniture d'électrons (12) réalisée d'au moins un matériau parmi le silicone, un mélange contenant du silicone à titre de composant principal, et un composé au silicone ; une couche isolante (13) formée sur ladite couche de fourniture d'électrons (12) ; et
une électrode métallique en film mince (15) formée sur ladite couche isolante (13), dans lequel des électrons sont émis lors de l'application d'un champ électrique entre ladite couche de fourniture d'électrons (12) et ladite électrode métallique en film mince (15) ; dans lequel ladite couche isolante (13) comporte au moins une région en forme d'île (14) dans laquelle l'épaisseur du film de ladite couche isolante (13) est graduellement réduite ; dans lequel ledit dispositif émetteur d'électrons (S) comprend encore une région au carbone (40) réalisée soit en carbone soit en un composé au carbone prévu sur au moins un endroit au sommet, au fond ou à l'intérieur de ladite région en forme d'île (14) ;
dans lequel ladite région en forme d'île (14) comprend une portion d'épaisseur minimum et une région cristalline (50) réalisée d'au moins un matériau parmi le silicone, un mélange contenant du silicone à titre de composant principal, et un composé au silicone à l'intérieur de ladite couche de fourniture d'électrons (12) dans la portion d'épaisseur minimum ou à proximité de celle-ci ;
ledit procédé comprenant les étapes consistant à :
former une couche amorphe de fourniture d'électrons (12) sur un substrat (10), ladite couche de fourniture d'électrons (12) étant réalisée d'au moins un matériau parmi le silicone, un mélange contenant du silicone à titre de composant principal, et un composé au silicone ;
former des écrans (20) sur ladite couche de fourniture d'électrons (12), chacun desdits écrans (20) constituant un cache autour d'une zone dans laquelle les écrans (20) sont en contact avec ladite couche de fourniture d'électrons (12) ;
déposer une couche isolante (13) par-dessus ladite couche de fourniture d'électrons (12) et lesdits écrans (20) de manière à constituer ladite couche isolante (13) comme un film mince en isolant, ladite couche isolante (13) ayant des régions en forme d'île (14) ayant chacune une portion d'épaisseur minimum dans laquelle l'épaisseur du film de ladite couche isolante (13) est graduellement réduite à proximité des zones de contact desdits écrans (20) ; et
former une électrode métallique en film mince (15) par-dessus ladite couche isolante (12), en constituant ainsi lesdites régions en forme d'île (14) à titre de sections émettrices d'électrons ;
**caractérisé en ce que** ledit procédé de fabrication comprend en outre une étape consistant à implanter des ions dopants dans les surfaces exposées de ladite couche de fourniture d'électrons (12) au fond desdites régions en forme d'île (14) pour former une structure de jonction pn (50a, 50b) dans ladite couche de fourniture d'électrons (12);
rapporter ladite région au carbone (40) réalisée soit en carbone soit en un composé au carbone à proximité desdites régions en forme d'île (14) après l'implantation desdits ions dopants ; et
appliquer un courant électrique à travers ladite couche de fourniture d'électrons (12) et ladite électrode métallique en film mince (15) pour former une région cristalline (50) réalisée d'au moins un matériau parmi le silicone, un mélange contenant du silicone à titre de composant principal, et un composé au silicone à l'intérieur de ladite couche de fourniture d'électrons (12) dans la portion d'épaisseur minimum ou à proximité de celle-ci,
dans lequel ladite structure de jonction pn (50a, 50b) est prévue dans ladite région cristalline (50).

2. Procédé de fabrication selon la revendication 1, comprenant en outre une étape consistant à éliminer lesdits écrans (20) immédiatement après ladite étape de formation de l'électrode métallique en film mince (15), et l'étape consistant à rapporter ladite région au carbone (14) est exécutée immédiatement après ladite étape d'élimination des écrans (20), formant ainsi ladite région au carbone (40) comme un film mince déposé par-dessus ladite électrode métallique en film mince (15).

3. Procédé de fabrication selon la revendication 2, dans lequel ladite étape consistant à rapporter ladite région au carbone (40) est exécutée en déposant ladite région au carbone (40) comme un film mince tout en appliquant un voltage entre ladite couche de fourniture d'électrons (12) et ladite électrode métallique en film mince (15).

4. Procédé de fabrication selon la revendication 3, dans lequel ledit voltage appliqué est fourni par intermittence en accord avec une période d'application de voltage dans laquelle le voltage croit et décroît.

5. Procédé de fabrication selon la revendication 1, comprenant en outre une étape consistant à éliminer lesdits écrans (20) immédiatement après ladite étape consistant à former la couche isolante (13), et ladite étape consistant à rapporter ladite région au carbone (40) est exécutée pendant ladite étape de formation de l'électrode métallique en film mince (15), de telle sorte que ladite région au carbone (40) est distribuée à l'intérieur de ladite électrode métallique en film mince (15).

6. Procédé de fabrication selon la revendication 1, dans lequel ladite étape consistant à rapporter ladite région au carbone (40) est exécutée immédiatement après ladite étape de formation de l'électrode métallique en film mince (15), en formant ainsi ladite région au carbone (40) comme un film mince déposé par-dessus ladite électrode métallique en film mince (15).

7. Procédé de fabrication selon la revendication 1, dans lequel ladite étape consistant à rapporter ladite région au carbone (40) est exécutée immédiatement avant ladite étape de formation de l'électrode métallique en film mince (15), en formant ainsi ladite région au carbone (40) comme un film mince déposé par dessous ladite électrode métallique en film mince (15).

8. Procédé de fabrication selon la revendication 1, dans lequel ladite étape consistant à rapporter ladite région au carbone (40) est exécutée immédiatement avant ladite étape de formation de la couche isolante (13), en formant ainsi ladite région au carbone (40) comme un film mince déposé par-dessous ladite couche isolante (13).

9. Procédé de fabrication selon l'une quelconque des revendications précédentes 6 à 8, comprenant en outre une étape consistant à éliminer lesdits écrans (20) immédiatement après ladite étape de formation de l'électrode métallique en film mince (15), et ladite étape consistant à rapporter ladite région au carbone (40) est exécutée immédiatement après ladite étape d'élimination des écrans (20), en formant ainsi ladite région au carbone (40) comme un film mince déposé par-dessus ladite électrode métallique en film mince (15).

10. Procédé de fabrication selon l'une quelconque des revendications précédentes 1 à 9, dans lequel l'étape consistant à former ladite région cristalline (50) est exécutée immédiatement après l'une au moins desdites étapes consistant à former ladite région au carbone (40), à former ladite électrode métallique en film mince (15), et ladite étape consistant à éliminer les écrans (20).

11. Procédé de fabrication selon l'une quelconque des revendications précédentes 1 à 10, dans laquelle lesdits écrans (20) sont des particules fines (20), et ladite étape consistant à former les écrans (20) comprend une étape consistant à pulvériser lesdites particules fines (20) sur ladite couche de fourniture d'électrons (12).

12. Procédé de fabrication selon l'une quelconque des revendications précédentes 1 à 11, dans lequel chacun desdits écrans est un bloc électriquement isolant (21a, 21b) présentant une forme effilée inverse, qui se projette vers l'extérieur dans une direction normale à ladite couche de fourniture d'électrons (12) et qui comporte un surplomb (22a, 22b) dans sa portion supérieure, qui se projette dans une direction parallèle à ladite couche de fourniture d'électrons (12), et ladite étape consistant à former les écrans inclus les opérations consistant à :
former une couche d'un matériau en bloc présentant une forme effilée inverse sur ladite couche de fourniture d'électrons (12) ;
former sur celle-ci un masque d'un agent résistant qui permet d'exposer au moins une partie de ladite couche de fourniture d'électrons (12) au moyen d'un procédé photolithographique ; et
faire une attaque dudit bloc présentant une forme effilée inverse (21 a, 21 b) ayant ledit surplomb (22a, 22b) par une méthode d'attaque à sec ou une méthode d'attaque en milieu humide.

13. Procédé de fabrication selon l'une quelconque des revendications précédentes 1 à 12, dans lequel ladite région cristalline (50) a une aire plus petite que celle de ladite région en forme d'île (14)
